# EUROPEAN PATENT APPLICATION

(11) **EP 4 576 592 A1**
(43) Date of publication of application: **25.06.2025**
(21) Application number: 23864460.3
(22) Date of filing: 30.06.2023
(51) Int. Cl.: H04B 1/40, H04B 1/28

(54) **TERMINAL DEVICE**

(30) Priority: 16.09.2022 CN 202211127661
(71) Applicant: Huawei Technologies Co., Ltd., Shenzhen, Guangdong 518129 (CN)
(72) Inventor: WANG, Shuqi, Shenzhen, Guangdong 518129 (CN); HUANG, Wei, Shenzhen, Guangdong 518129 (CN); LI, Weihua, Shenzhen, Guangdong 518129 (CN)
(74) Representative: Gill Jennings & Every LLP
(86) International application number: PCT/CN2023/105351
(87) International publication number: WO 2024/055723

(57) **Abstract**

This application relates to the field of communication technologies, and provides a terminal device, which can integrate a first radio frequency receive circuit and a second radio frequency receive circuit on a same chip, to perform satellite communication and wireless communication simultaneously. The terminal device includes a first radio frequency front-end circuit, a second radio frequency front-end circuit, an input circuit, a first radio frequency receive circuit, a second radio frequency receive circuit, a satellite communication baseband circuit, and a wireless communication baseband circuit. The input circuit receives a first radio frequency signal and a second radio frequency signal, and outputs the first radio frequency signal and the second radio frequency signal through a same branch. One of the first radio frequency receive circuit and the second radio frequency receive circuit processes the received first radio frequency signal into a first baseband signal, and sends the first baseband signal to the satellite communication baseband circuit. The other of the first radio frequency receive circuit and the second radio frequency receive circuit processes the received second radio frequency signal into a second baseband signal, and sends the second baseband signal to the wireless communication baseband circuit.

## Description

This application claims priority to Chinese Patent Application No. 202211127661.1, filed with the China National Intellectual Property Administration on September 16, 2022 and entitled "TERMINAL DEVICE", which is incorporated herein by reference in its entirety.

### TECHNICAL FIELD

This application relates to the field of communication technologies, and in particular, to a terminal device.

### BACKGROUND

At present, satellite communication is gradually integrated with wireless communication, to implement extension and transformation of satellite communication services, such as short messages, pictures, and voices to a mass consumer market. For example, a satellite communication function module is widely integrated into a terminal device, to provide a user with a comprehensive all-scenario communication capability including a cellular communication technology, a wireless network communication technology (wireless fidelity, Wi-Fi), Bluetooth (Bluetooth, BT), a short message communication technology, and the like.

However, currently, the satellite communication function module is integrated into the terminal device in a form of an independent chip, and is not on a same chip as a cellular, Wi-Fi, or BT function module. Consequently, the terminal device has low product integration, and high board-level costs; and when a plurality of function modules work simultaneously, mutual interference exists, joint control cannot be implemented, and user experience is affected.

### SUMMARY

This application provides a terminal device, which can integrate a first radio frequency receive circuit and a second radio frequency receive circuit on a same chip, so as to improve product integration of the terminal device and reduce board-level cabling to reduce board-level costs, and further perform satellite communication and wireless communication simultaneously.

According to a first aspect, this application provides a terminal device. The terminal device includes a first radio frequency front-end circuit, a second radio frequency front-end circuit, an input circuit, a first radio frequency receive circuit, a second radio frequency receive circuit, a satellite communication baseband circuit, and a wireless communication baseband circuit. The input circuit is configured to: receive a first radio frequency signal sent by the first radio frequency front-end circuit and a second radio frequency signal sent by the second radio frequency front-end circuit, and output the first radio frequency signal and the second radio frequency signal through a same branch. One of the first radio frequency receive circuit and the second radio frequency receive circuit is configured to: process the received first radio frequency signal into a first baseband signal, and send the first baseband signal to the satellite communication baseband circuit. The other of the first radio frequency receive circuit and the second radio frequency receive circuit is configured to: process the received second radio frequency signal into a second baseband signal, and send the second baseband signal to the wireless communication baseband circuit.

The following may use an example in which the wireless communication baseband circuit is a short-range wireless communication baseband circuit for description. The short-range wireless communication baseband circuit may be used for short-range wireless communication.

In this application, a downlink S band of satellite communication is close to a downlink frequency band of wireless communication such as Wi-Fi communication and BT communication, and the received radio frequency signals are similar in feature, so that the first radio frequency signal used to form a satellite communication baseband signal and the second radio frequency signal used to form a Wi-Fi/BT baseband signal may share a same input circuit. In other words, an input end of the input circuit is electrically connected to the first radio frequency front-end circuit and the second radio frequency front-end circuit separately, to receive the first radio frequency signal sent by the first radio frequency front-end circuit and the second radio frequency signal sent by the second radio frequency front-end circuit. In addition, an output end of the input circuit is electrically connected to the first radio frequency receive circuit and the second radio frequency receive circuit separately, to send the first radio frequency signal to the first radio frequency receive circuit and send the second radio frequency signal to the second radio frequency receive circuit through the same output end. In this way, the first radio frequency receive circuit and the second radio frequency receive circuit that are electrically connected to the same output end of the input circuit are integrated on a same chip, to improve product integration of the terminal device and reduce board-level cabling to reduce board-level costs.

Based on this, in this application, the satellite communication baseband circuit and the wireless communication baseband circuit may be further integrated on a same chip with the first radio frequency receive circuit and the second radio frequency receive circuit, to further improve product integration of the terminal device and reduce board-level cabling to reduce board-level costs.

In addition, a process in which the first radio frequency signal is transmitted from the first radio frequency front-end circuit, the input circuit, and the first radio frequency receive circuit to the satellite communication baseband circuit and a process in which the second radio frequency signal is transmitted from the second radio frequency front-end circuit, the input circuit, and the second radio frequency receive circuit to the wireless communication baseband circuit do not interfere with each other. In other words, in the process in which the first radio frequency signal is transmitted to the satellite communication baseband circuit, transmission of the second radio frequency signal to the wireless communication baseband circuit is not affected. Alternatively, in the process in which the second radio frequency signal is transmitted to the wireless communication baseband circuit, transmission of the first radio frequency signal to the satellite communication baseband circuit is not affected. Therefore, satellite communication and wireless communication may further be performed simultaneously.

In some possible implementations, the input circuit may also be integrated with the first radio frequency receive circuit and the second radio frequency receive circuit on a same chip, to further improve product integration of the terminal device and reduce board-level cabling to reduce board-level costs. Optionally, the input circuit may be a combiner.

In some possible implementations, the wireless communication baseband circuit includes a first wireless communication baseband circuit and a second wireless communication baseband circuit. The first wireless communication baseband circuit is a Wi-Fi baseband circuit, and the second wireless communication baseband circuit is a Bluetooth baseband circuit. Alternatively, the first wireless communication baseband circuit is a Bluetooth baseband circuit, and the second wireless communication baseband circuit is a Wi-Fi baseband circuit.

Further, the terminal device further includes a third radio frequency receive circuit. The other of the first radio frequency receive circuit and the second radio frequency receive circuit is configured to: process the received second radio frequency signal into a second baseband signal, and send the second baseband signal to the first wireless communication baseband circuit. The third radio frequency receive circuit is configured to: receive the second radio frequency signal sent by the input circuit, process the second radio frequency signal into a third baseband signal, and send the third baseband signal to the second wireless communication baseband circuit.

Because both a frequency band range of Wi-Fi (for example, 2.4G Wi-Fi) communication and a frequency band range of BT communication are 2400 MHz to 2483.5 MHz, the second radio frequency receive circuit and the third radio frequency receive circuit may share a second antenna and the second radio frequency front-end circuit, to receive the second radio frequency signal through the input circuit. In this way, the first radio frequency receive circuit, the second radio frequency receive circuit, and the third radio frequency receive circuit that are electrically connected to the same output end of the input circuit are integrated on a same chip, to improve product integration of the terminal device and reduce board-level cabling to reduce board-level costs.

In addition, a process in which the first radio frequency signal is transmitted from the first radio frequency front-end circuit, the input circuit, and the first radio frequency receive circuit to the satellite communication baseband circuit, a process in which the second radio frequency signal is transmitted from the second radio frequency front-end circuit, the input circuit, and the second radio frequency receive circuit to the first wireless communication baseband circuit, and a process in which the second radio frequency signal is transmitted from the second radio frequency front-end circuit, the input circuit, and the third radio frequency receive circuit to the second wireless communication baseband circuit do not interfere with each other. Therefore, satellite communication, Wi-Fi communication, and BT communication may further be performed simultaneously.

In some possible implementations, the terminal device further includes a first selector switch and a second selector switch. The first radio frequency receive circuit is electrically connected to the satellite communication baseband circuit or the second wireless communication baseband circuit through the first selector switch. In this way, the first radio frequency receive circuit may be reused for the satellite communication baseband circuit and the second wireless communication baseband circuit.

The second radio frequency receive circuit is electrically connected to the first wireless communication baseband circuit or the satellite communication baseband circuit through the second selector switch. In this way, the second radio frequency receive circuit may be reused for the satellite communication baseband circuit and the first wireless communication baseband circuit.

In some possible implementations, the terminal device further includes a third selector switch, a fourth selector switch, a first analog-to-digital conversion circuit, a second analog-to-digital conversion circuit, and a third analog-to-digital conversion circuit. The first radio frequency receive circuit is electrically connected to an input end of the first analog-to-digital conversion circuit or an input end of the second analog-to-digital conversion circuit through the third selector switch. An output end of the first analog-to-digital conversion circuit is electrically connected to the second wireless communication baseband circuit, and an output end of the second analog-to-digital conversion circuit is electrically connected to the satellite communication baseband circuit. In this way, the first radio frequency receive circuit may be reused for the second wireless communication baseband circuit and the satellite communication baseband circuit 41.

The second radio frequency receive circuit is electrically connected to the input end of the second analog-to-digital conversion circuit or an input end of the third analog-to-digital conversion circuit through the fourth selector switch, and an output end of the third analog-to-digital conversion circuit is electrically connected to the first wireless communication baseband circuit. In this way, the second radio frequency receive circuit may be reused for the satellite communication baseband circuit and the first wireless communication baseband circuit.

In some possible implementations, the first radio frequency front-end circuit, the second radio frequency front-end circuit, the combiner, the first radio frequency receive circuit, the second radio frequency receive circuit, the satellite communication baseband circuit, and the first wireless communication baseband circuit are all integrated on a same chip, to further improve product integration of the terminal device and reduce board-level cabling to reduce board-level costs.

In some possible implementations, the terminal device further includes a first baseband transmit circuit, a second baseband transmit circuit, and a third radio frequency front-end circuit. The first baseband transmit circuit is configured to: receive a fourth baseband signal sent by the first wireless communication baseband circuit, process the fourth baseband signal into a third radio frequency signal, and transmit the third radio frequency signal through the third radio frequency front-end circuit. The second baseband transmit circuit is configured to: receive a fifth baseband signal sent by the second wireless communication baseband circuit, process the fifth baseband signal into a fourth radio frequency signal, and transmit the fourth radio frequency signal through the third radio frequency front-end circuit.

The first baseband transmit circuit electrically connected to the first wireless communication baseband circuit and the second baseband transmit circuit electrically connected to the second wireless communication baseband circuit may be integrated on a same chip with the foregoing satellite communication baseband circuit, the first wireless communication baseband circuit, the second wireless communication baseband circuit, the first radio frequency receive circuit, the second radio frequency receive circuit, the third radio frequency receive circuit, and the input circuit, to further improve product integration of the terminal device and reduce board-level cabling to reduce board-level costs.

According to a second aspect, this application provides a terminal device. The terminal device includes N first radio frequency front-end circuits, N first radio frequency receive circuits, a second radio frequency receive circuit, a switch, a satellite communication baseband circuit, and a cellular baseband circuit, where N is a positive integer. The N first radio frequency receive circuits are in a one-to-one correspondence with and electrically connected to the N first radio frequency front-end circuits, and any first radio frequency receive circuit is configured to: receive a first radio frequency signal sent by the first radio frequency front-end circuit electrically connected to the first radio frequency receive circuit, process the first radio frequency signal into a first baseband signal, and send the first baseband signal to the cellular baseband circuit. An input side of the second radio frequency receive circuit is electrically connected to an input side of at least one first radio frequency receive circuit through the switch, and is configured to: receive the first radio frequency signal sent by at least one first radio frequency front-end circuit, process the first radio frequency signal into a second baseband signal, and send the second baseband signal to the satellite communication baseband circuit.

In this application, a downlink S band of satellite communication is close to a downlink frequency band of cellular communication, and the received radio frequency signals are close in signal strength, so that the first radio frequency signal received by the at least one first radio frequency front-end circuit may be reused for satellite communication. Optionally, the second radio frequency receive circuit used for satellite communication may be electrically connected to the at least one first radio frequency front-end circuit through the switch, to receive the first radio frequency signal sent by the at least one first radio frequency front-end circuit. In this way, the first radio frequency receive circuit, the first radio frequency signal of which is reused, and the second radio frequency receive circuit are integrated on a same chip, to improve product integration of the terminal device and reduce board-level cabling to reduce board-level costs.

Based on this, in this application, the satellite communication baseband circuit and the cellular baseband circuit may be further integrated on a same chip with the first radio frequency receive circuit and the second radio frequency receive circuit, to further improve product integration of the terminal device and reduce board-level cabling to reduce board-level costs.

In addition, a process in which the first radio frequency signal is transmitted from the first radio frequency front-end circuit, and the first radio frequency receive circuit to the cellular baseband circuit and a process in which the second radio frequency signal is transmitted from the first radio frequency front-end circuit, and the second radio frequency receive circuit to the satellite communication baseband circuit do not interfere with each other. In other words, in the process in which the first radio frequency signal is transmitted to the satellite communication baseband circuit, transmission of the first radio frequency signal to the cellular baseband circuit is not affected. Alternatively, in the process in which the first radio frequency signal is transmitted to the cellular baseband circuit, transmission of the first radio frequency signal to the satellite communication baseband circuit is not affected. Therefore, satellite communication and cellular communication may further be performed simultaneously.

In some possible implementations, the first radio frequency front-end circuit, the N first radio frequency receive circuits, the second radio frequency receive circuit, the switch, the satellite communication baseband circuit, and the cellular baseband circuit are integrated on a same chip, to further improve product integration of the terminal device and reduce board-level cabling to reduce board-level costs.

In some possible implementations, the terminal device further includes a baseband transmit branch, and the terminal device further includes a second radio frequency front-end circuit. The baseband transmit branch is configured to: receive a third baseband signal sent by the cellular baseband circuit, process the third baseband signal into a second radio frequency signal, and transmit the second radio frequency signal through the second radio frequency front-end circuit.

The baseband transmit circuit electrically connected to the cellular communication baseband circuit may be integrated on a same chip with the foregoing satellite communication baseband circuit, the cellular wireless communication baseband circuit, the N first radio frequency receive circuits, and the second radio frequency receive circuit, to further improve product integration of the terminal device and reduce board-level cabling to reduce board-level costs.

### BRIEF DESCRIPTION OF DRAWINGS

FIG. 1a is an interaction diagram of satellite communication according to an embodiment of this application;
FIG. 1b is a connection diagram of satellite communication modules and a connection diagram of wireless communication modules according to the conventional technology;
FIG. 2a is a circuit diagram of a terminal device according to an embodiment of this application;
FIG. 2b is another circuit diagram of a terminal device according to an embodiment of this application;
FIG. 3a is still another circuit diagram of a terminal device according to an embodiment of this application;
FIG. 3b is still another circuit diagram of a terminal device according to an embodiment of this application;
FIG. 4a is still another circuit diagram of a terminal device according to an embodiment of this application;
FIG. 4b is still another circuit diagram of a terminal device according to an embodiment of this application;
FIG. 5a is still another circuit diagram of a terminal device according to an embodiment of this application;
FIG. 5b is still another circuit diagram of a terminal device according to an embodiment of this application;
FIG. 5c is still another circuit diagram of a terminal device according to an embodiment of this application;
FIG. 6a is still another circuit diagram of a terminal device according to an embodiment of this application;
FIG. 6b is still another circuit diagram of a terminal device according to an embodiment of this application;
FIG. 6c is still another circuit diagram of a terminal device according to an embodiment of this application;
FIG. 7a is still another circuit diagram of a terminal device according to an embodiment of this application; and
FIG. 7b is still another circuit diagram of a terminal device according to an embodiment of this application.

### Reference numerals:

10: antenna; 11: first antenna; 12: second antenna; 21: first radio frequency front-end circuit, 22: second radio frequency front-end circuit, 23: third radio frequency front-end circuit, 31: first radio frequency receive circuit, 32: second radio frequency receive circuit, 33: third radio frequency receive circuit, 37: first baseband transmit circuit, 38: second baseband transmit circuit, 39: baseband transmit circuit, 40: short-range wireless communication baseband circuit, 401: first short-range wireless communication baseband circuit, 402: second short-range wireless communication baseband circuit, 41: satellite communication baseband circuit, 42: cellular baseband circuit, 51: first selector switch; 52: second selector switch; 53: third selector switch; 61: first analog-to-digital conversion circuit, 62: second analog-to-digital conversion circuit, 63: third analog-to-digital conversion circuit, 80: switch; and 100: input circuit.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. "And/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "Mounting", "connection", "being connected to", and the like should be understood in a broad sense, for example, may be a fixed connection, a detachable connection, or an integral connection, or may be a direct connection, an indirect connection through an intermediate medium, or internal communication between two elements. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device. "On", "below", "left", "right", and the like are used only relative to the orientation of the components in the accompanying drawings. These directional terms are relative concepts, are used for relative descriptions and clarifications, and may change accordingly as positions at which the components in the accompanying drawings are placed change.

In recent years, a BeiDou navigation satellite system (BeiDou navigation satellite system, BDS), for which global satellite networking is completed in 2020, develops rapidly, and is a third mature navigation satellite system following a navigation satellite system like a global positioning system (global positioning system, GPS) and a global navigation satellite system (global navigation satellite system, GLONASS). In addition, the BeiDou navigation satellite system is a satellite system with navigation and communication capabilities. In a radio navigation satellite system (radio navigation satellite system), a user receives a satellite radio navigation signal, independently measures distances to at least four satellites, and calculates a location, a speed, and a navigation parameter of the user, to implement a satellite navigation function. A radio determination satellite system (radio determination satellite system, RDSS), as a unique service function of the BeiDou navigation satellite system, can provide a bidirectional short message information service to realize a satellite communication function. A BeiDou short message is a special function of the BeiDou navigation satellite system, and is used to distinguish the BeiDou navigation satellite system from other satellite communication systems in the world.

The BeiDou short message has been widely used in fields such as disaster relief, field work, and no man's land search and rescue. A terminal device integrated with a satellite communication function module may perform emergency communication by using the BeiDou short message.

Further, a BeiDou-3 global navigation satellite system continuously improves a service capability of the BeiDou short message, so that regional short message communication (regional short message communication, RSMC) in the BeiDou short message has reached a maximum communication capability of 14,000 bits (1000 Chinese characters) each time, and global short message communication (global short message communication, GSMC) in the BeiDou short message has reached a communication capability of 560 bits (40 Chinese characters) each time. Based on a stronger communication capability, a BeiDou short message communication service will be further expanded to the consumer field to provide more extensive services such as emergency rescue alarm, emergency communication, and location report, thereby fully demonstrating a core application value of a BeiDou short message function. In some possible implementations, the terminal device may be an in-vehicle terminal device, a mobile phone, a BeiDou handheld device, or the like.

In addition to satellite communication, a low-orbit satellite mobile communication service provider represented by the Globalstar satellite (Globalstar satellite) or the like is also actively developing narrowband satellite communication services, such as short messages, voices, and picture services. Satellite systems such as Starlink and Iridium are also planned to support a communication function of a satellite-to-cellular service. In the future, the satellite communication function will be more widely used in products such as a consumer terminal.

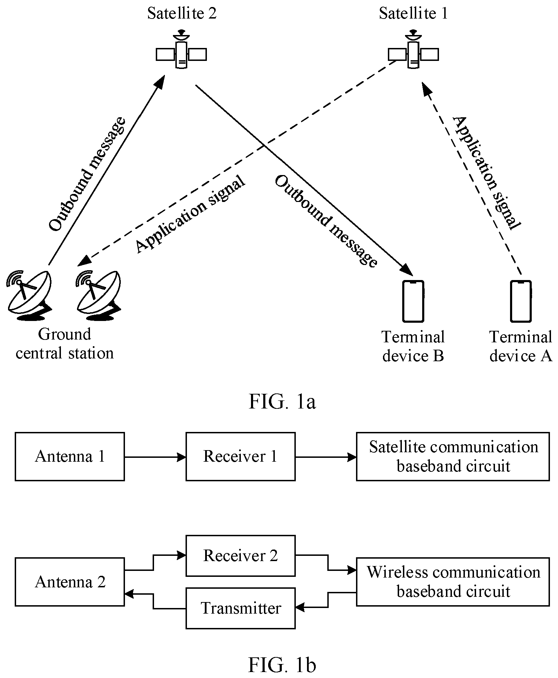

As shown in FIG. 1a, an example in which a sender is a terminal device A and a receiver is a terminal device B is used. A communication procedure of a satellite system like an RDSS is as follows: After completing satellite searching, the terminal device A first encrypts an application signal including an identity document (identity document, ID) of the terminal device B and communication content, and then sends the encrypted application signal to a visible satellite 1; the visible satellite 1 transparently transmits and forwards an uplink application signal to a ground central station; after receiving the application signal, the ground central station decrypts and then encrypts the application signal; when the terminal device B initiates an information query, the ground central station encrypts information that belongs to the terminal device B, adds the encrypted information into a satellite 2 visible to the terminal device B, and broadcasts the encrypted information to the terminal device B through the satellite 2; and the terminal device B receives an outbound message, demodulates and decrypts the outbound message, to complete satellite communication once.

FIG. 1a shows an example in which a visible satellite of the terminal device A is the satellite 1, a visible satellite of the terminal device B is the satellite 2, and the satellite 1 and the satellite 2 are different satellites. In some other possible implementations, visible satellites of the terminal device A and the terminal device B may alternatively be a same satellite, that is, the satellite 1 and the satellite 2 are a same satellite.

As a satellite communication function is more widely applied to a consumer market, a satellite communication module may be further integrated with a wireless communication function module like a Wi-Fi function module, a BT function module, or a cellular function module in a same terminal device. For example, the satellite communication module and the BT function module are integrated into the same terminal device A, and the satellite communication module communicates with the terminal device B through the BT function module, to implement interconnection between the satellite communication module and the mobile Internet. Alternatively, the satellite communication module and the wireless communication function module like the BT function module, the Wi-Fi function module, and the cellular function module are directly integrated into a same intelligent device, and interconnection and interworking between the satellite communication module and the wireless communication function module like the BT function module, the Wi-Fi function module, and the cellular function module are implemented through an application processor in the intelligent device.

However, as shown in FIG. 1b, although the satellite communication module integrated into the terminal device A may communicate with the terminal device B, and the satellite communication module in the same terminal device may communicate with the wireless communication function module like the BT function module, the Wi-Fi function module, or the cellular function module, an existing satellite communication function module is usually integrated into an independent chip. Consequently, the terminal device has low product integration, and high board-level costs; and when a plurality of function modules work simultaneously, a large quantity of designed function modules and complex interfaces result in mutual interference between the function modules, and joint control cannot be implemented. Therefore, deep coupling of or even integrating the satellite communication module, and the wireless communication function module like the Wi-Fi function module, the BT function module, and the cellular function module on a same chip becomes an industrial development requirement.

Based on the foregoing problem, the inventor finds that, because a satellite radio downlink frequency band specified by the International Telecommunication Union (ITU) is an S band, and a range of the S band is 2483.5 MHz to 2500 MHz, downlink frequency bands of the BeiDou short message, the Globalstar, and the like are this frequency band. However, a frequency band range of the Wi-Fi (for example, 2.4 G Wi-Fi) function module and a frequency band range of the BT function module are 2400 MHz to 2483.5 MHz, and a frequency band range of the cellular (for example, LTE B41 and NR N41) function module is 2496 MHz to 2690 MHz. A downlink frequency band of this type of satellite communication module is close to frequency bands of the Wi-Fi function module, the BT function module, and the cellular function module, and received radio frequency signals are similar in feature. Therefore, embodiments of this application provide a terminal device. As frequency bands of the satellite communication module, the Wi-Fi function module, the BT function module, and the cellular function module are close, and received radio frequency signals are similar in feature, the terminal device may enable the satellite communication module and the Wi-Fi function module and/or the BT function module, or the cellular function module to share at least some of radio frequency receive paths, to integrate a downlink part of the satellite communication module and the wireless communication function module like the BT function module and/or the Wi-Fi function module or the cellular function module on a same chip.

The following describes a circuit structure of the terminal device in detail with reference to the accompanying drawings.

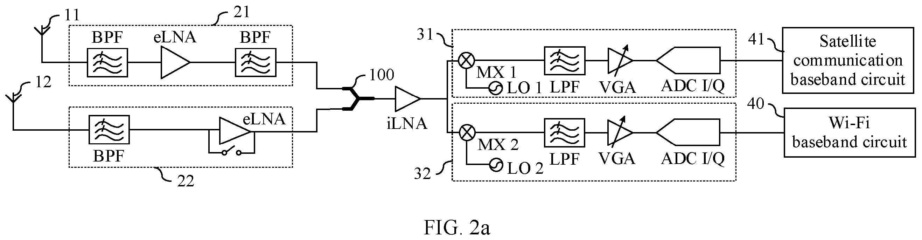

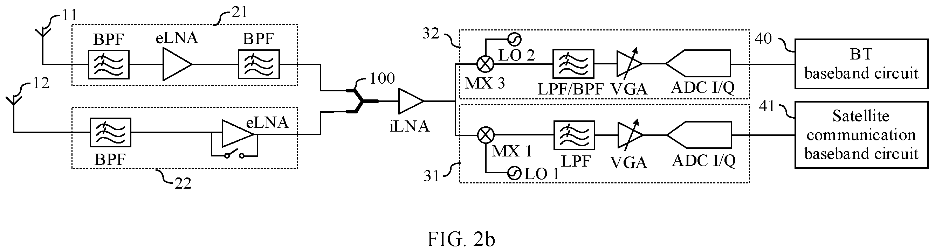

As shown in FIG. 2a and FIG. 2b, the terminal device includes a first radio frequency front-end circuit 21, a second radio frequency front-end circuit 22, an input circuit 100, a first radio frequency receive circuit 31, a second radio frequency receive circuit 32, a satellite communication baseband circuit 41, and a short-range wireless communication baseband circuit 40.

The input circuit 100 is configured to: receive a first radio frequency signal sent by the first radio frequency front-end circuit 21 and a second radio frequency signal sent by the second radio frequency front-end circuit 22, and output the first radio frequency signal and the second radio frequency signal through a same branch.

One of the first radio frequency receive circuit 31 and the second radio frequency receive circuit 32 is configured to: process the received first radio frequency signal into a first baseband signal, and send the first baseband signal to the satellite communication baseband circuit 41. The other of the first radio frequency receive circuit 31 and the second radio frequency receive circuit 32 is configured to: process the received second radio frequency signal into a second baseband signal, and send the second baseband signal to the short-range wireless communication baseband circuit 40.

For example, the first radio frequency receive circuit 31 is configured to: receive the second radio frequency signal, process the received second radio frequency signal into the second baseband signal, and send the second baseband signal to the short-range wireless communication baseband circuit 40. The second radio frequency receive circuit 32 is configured to: receive the first radio frequency signal, process the received first radio frequency signal into the first baseband signal, and send the first baseband signal to the satellite communication baseband circuit 41.

For another example, the first radio frequency receive circuit 31 is configured to: receive the first radio frequency signal, process the received first radio frequency signal into the first baseband signal, and send the first baseband signal to the satellite communication baseband circuit 41. The second radio frequency receive circuit 32 is configured to: receive the second radio frequency signal, process the received second radio frequency signal into the second baseband signal, and send the second baseband signal to the short-range wireless communication baseband circuit 40. For ease of description, this case is used as an example for description in this embodiment.

In some possible implementations, the satellite communication baseband circuit 41 may be an RDSS baseband circuit or the like, and is configured to receive a satellite communication baseband signal for satellite communication. The short-range wireless communication baseband circuit 40 may be a short-range wireless communication baseband circuit 40 like a Wi-Fi baseband circuit, a BT baseband circuit, a ZigBee baseband circuit, or a radio frequency identification (radio frequency identification, RFID) baseband circuit. For ease of description, the following uses an example in which the short-range wireless communication baseband circuit 40 is a Wi-Fi baseband circuit for description. The Wi-Fi baseband circuit is configured to receive a Wi-Fi baseband signal for Wi-Fi communication.

A communication principle of the terminal device may be implemented in the following process.

As shown in FIG. 2a, the terminal device may further include a first antenna 11 and a second antenna 12. The first antenna 11 and the second antenna 12 are configured to receive radio frequency signals, and the radio frequency signals may be processed for satellite communication and Wi-Fi communication. Because a signal frequency band of a signal for satellite communication is different from a signal frequency band of a signal for Wi-Fi communication, the first antenna 11 and the second antenna 12 are electrically connected to different front-end circuits. Specifically, the first antenna 11 may be electrically connected to the first radio frequency front-end circuit 21, and is configured to send a radio frequency signal to the first radio frequency front-end circuit 21. The second antenna 12 may be electrically connected to the second radio frequency front-end circuit 22, and is configured to send a radio frequency signal to the second radio frequency front-end circuit 22.

As shown in FIG. 2a, the first radio frequency front-end circuit 21 may include an external filter, an external amplifier, and the like. After receiving a radio frequency signal, the first radio frequency front-end circuit 21 may filter the radio frequency signal through the external filter, to filter a frequency band of the radio frequency signal to a frequency band for satellite communication, and filter out out-of-band interference. Alternatively, the radio frequency signal may be amplified through the external amplifier, so that signal strength of the amplified radio frequency signal meets signal strength for satellite communication. The filtered and amplified radio frequency signal may be referred to as the first radio frequency signal. The external filter may include, for example, at least one band-pass filter (band-pass filter, BPF), and the external amplifier may include at least one low noise amplifier (low noise amplifier, LNA).

Still refer to FIG. 2a. The second radio frequency front-end circuit 22 may also include an external filter, an external amplifier, and the like. After receiving a radio frequency signal, the second radio frequency front-end circuit 22 may filter the radio frequency signal through the external filter, to filter a frequency band of the radio frequency signal to a frequency band for Wi-Fi communication. Alternatively, the radio frequency signal may be amplified through the external amplifier, so that signal strength of the amplified radio frequency signal meets signal strength for Wi-Fi communication. The filtered and amplified radio frequency signal may be referred to as the second radio frequency signal. The external filter may include, for example, at least one BPF, and the external amplifier may include at least one LNA.

A downlink S band of satellite communication is close to a downlink frequency band of Wi-Fi communication, and received radio frequency signals are similar in feature, so that the first radio frequency signal used to form a satellite communication baseband signal and the second radio frequency signal used to form a Wi-Fi baseband signal may share the same input circuit 100. In other words, an input end of the input circuit 100 is electrically connected to the first radio frequency front-end circuit 21 and the second radio frequency front-end circuit 22 separately, to receive the first radio frequency signal sent by the first radio frequency front-end circuit 21 and the second radio frequency signal sent by the second radio frequency front-end circuit 22. In addition, an output end of the input circuit 100 is electrically connected to the first radio frequency receive circuit 31 and the second radio frequency receive circuit 32 separately, to send the first radio frequency signal to the first radio frequency receive circuit 31 and send the second radio frequency signal to the second radio frequency receive circuit 32 through the same output end. In this way, the first radio frequency receive circuit 31 and the second radio frequency receive circuit 32 that are electrically connected to the same output end of the input circuit 100 are integrated on a same chip, to improve product integration of the terminal device and reduce board-level cabling to reduce board-level costs.

In some possible implementations, the input circuit 100 may also be integrated with the first radio frequency receive circuit 31 and the second radio frequency receive circuit 32 on a same chip, to further improve product integration of the terminal device and reduce board-level cabling to reduce board-level costs.

A specific circuit structure of the input circuit 100 is not limited in embodiments of this application, provided that the input circuit 100 includes two input ends and one output end, to receive the first radio frequency signal and the second radio frequency signal through the two input ends respectively, and output the first radio frequency signal and the second radio frequency signal through the one output end. Optionally, the input circuit 100 may be a combiner.

As shown in FIG. 2a, the first radio frequency receive circuit 31 may include a first frequency mixer MX 1, a built-in filter, a built-in LNA, a built-in variable gain amplifier (variable gain amplifier, VGA), an analog-to-digital conversion (analogue-to-digital conversion, ADC) circuit, and the like. The terminal device may further include a first local oscillator circuit LO 1. A parameter of each component in the first radio frequency receive circuit 31 may be configured, to ensure that the first radio frequency receive circuit 31 receives a first radio frequency signal of a specific strength within a correct frequency band range. After receiving the first radio frequency signal, the first radio frequency receive circuit 31 may further amplify the first radio frequency signal through the built-in LNA, so that signal strength of the amplified first radio frequency signal better meets signal strength for satellite communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal is set to be corresponding to a frequency band for satellite communication. Alternatively, the built-in filter may be used to filter the baseband signal obtained by performing frequency mixing through the first frequency mixer MX 1, so that a frequency band of the baseband signal better meets a frequency band for satellite communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain a first baseband signal, and the first baseband signal is sent to the satellite communication baseband circuit 41. The built-in filter may be a low-pass filter (low-pass filter, LPF).

Still refer to FIG. 2a. The second radio frequency receive circuit 32 may include a second frequency mixer MX 2, a built-in filter, a built-in LNA, a built-in VGA, an ADC, and the like. The terminal device may further include a second local oscillator circuit LO 2. A parameter of each component in the second radio frequency receive circuit 32 may be configured, to ensure that the second radio frequency receive circuit 32 receives a second radio frequency signal of a specific strength within a correct frequency band range. After receiving the second radio frequency signal, the second radio frequency receive circuit 32 may further amplify the second radio frequency signal through the built-in LNA, so that signal strength of the amplified second radio frequency signal better meets signal strength for Wi-Fi satellite communication. Alternatively, the second frequency mixer MX 2 may be used to perform frequency mixing on the second radio frequency signal and a second local oscillator signal provided by the second local oscillator circuit LO 2, to obtain a baseband signal. A frequency of the second local oscillator signal is set to be corresponding to a frequency band for Wi-Fi communication. Alternatively, the built-in filter may be used to filter the baseband signal obtained by performing frequency mixing through the second frequency mixer MX 2, so that a frequency band of the baseband signal better meets a frequency band for Wi-Fi communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain a second baseband signal, and the second baseband signal is sent to the short-range wireless communication baseband circuit 40. The built-in filter may be an LPF.

A process in which the first radio frequency signal is transmitted from the first radio frequency front-end circuit 21, the input circuit 100, and the first radio frequency receive circuit 31 to the satellite communication baseband circuit 41 and a process in which the second radio frequency signal is transmitted from the second radio frequency front-end circuit 22, the input circuit 100, and the second radio frequency receive circuit 32 to the short-range wireless communication baseband circuit 40 do not interfere with each other. In other words, in the process in which the first radio frequency signal is transmitted to the satellite communication baseband circuit 41, transmission of the second radio frequency signal to the short-range wireless communication baseband circuit 40 is not affected. Alternatively, in the process in which the second radio frequency signal is transmitted to the short-range wireless communication baseband circuit 40, transmission of the first radio frequency signal to the satellite communication baseband circuit 41 is not affected. Therefore, satellite communication and Wi-Fi communication may be performed simultaneously.

In addition, in this embodiment of this application, the satellite communication baseband circuit 41 and the short-range wireless communication baseband circuit 40 may be further integrated on a same chip with the first radio frequency receive circuit 31, the second radio frequency receive circuit 32, and the input circuit 100, to further improve product integration of the terminal device and reduce board-level cabling to reduce board-level costs.

In some possible implementations, as shown in FIG. 2a, the built-in LNA of the first radio frequency receive circuit 31 and the built-in LNA of the second radio frequency receive circuit 32 may be shared, to save a layout area of the terminal device. After being amplified by the same built-in LNA, the first radio frequency signal and the second radio frequency signal are respectively input to the first frequency mixer MX 1 and the second frequency mixer MX 2. To distinguish an external LNA from a built-in LNA, the external LNA can be an eLNA, and the built-in LNA may be an iLNA.

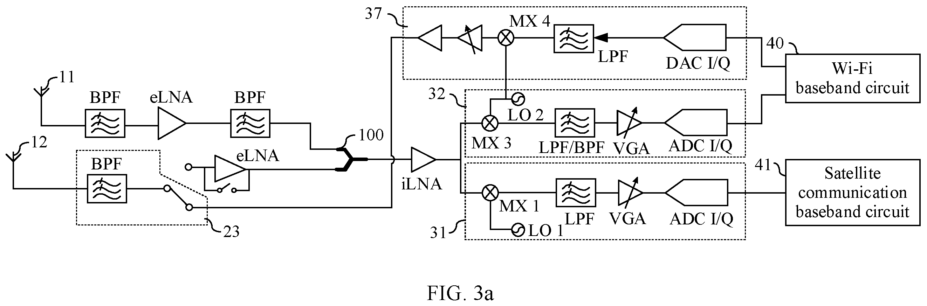

In some embodiments, as shown in FIG. 3a, the terminal device may further include a first baseband transmit circuit 37 and a third radio frequency front-end circuit 23. An input end of the first baseband transmit circuit 37 is electrically connected to the short-range wireless communication baseband circuit 40, and an output end of the first baseband transmit circuit 37 is electrically connected to the third radio frequency front-end circuit 23, to receive a fourth baseband signal sent by the short-range wireless communication baseband circuit 40. The first baseband transmit circuit 37 includes a digital-to-analog conversion circuit (digital-to-analog converter, DAC), a built-in frequency mixer, a built-in amplifier, and the like. Amplification, filtering, and frequency mixing processing may be performed on the fourth baseband signal through the DAC, the built-in frequency mixer, and the built-in amplifier, to obtain a third radio frequency signal, where a frequency band and signal strength of the third radio frequency signal meet a frequency band and signal strength for Wi-Fi communication. Then, the third radio frequency signal is transmitted through the third radio frequency front-end circuit 23.

Herein, the third radio frequency front-end circuit 23 or the second radio frequency front-end circuit 22 may be electrically connected to the second antenna 12 through a gating switch. In this way, when the third radio frequency front-end circuit 23 is electrically connected to the second antenna 12 through the gating switch, the third radio frequency front-end circuit 23 may transmit, through the second antenna 12, the third radio frequency signal for Wi-Fi communication; and when the second radio frequency front-end circuit 22 is electrically connected to the second antenna 12 through the gating switch, the second radio frequency front-end circuit 22 may receive, through the second antenna 12, a radio frequency signal for Wi-Fi communication.

In some possible implementations, the first baseband transmit circuit 37 electrically connected to the short-range wireless communication baseband circuit 40 may be integrated on a same chip with the satellite communication baseband circuit 41, the short-range wireless communication baseband circuit 40, the first radio frequency receive circuit 31, the second radio frequency receive circuit 32, and the input circuit 100, to further improve product integration of the terminal device and reduce board-level cabling to reduce board-level costs.

The foregoing description is merely an example for describing a case in which the short-range wireless communication baseband circuit 40 is a Wi-Fi baseband circuit. In some other possible implementations, the short-range wireless communication baseband circuit 40 may alternatively be a BT baseband circuit, a ZigBee baseband circuit, an RFID baseband circuit, or the like. For example, as shown in FIG. 2b, if the short-range wireless communication baseband circuit 40 is a BT baseband circuit, any one of the foregoing amplifiers may amplify the radio frequency signal received by the second antenna 12, so that signal strength of the amplified radio frequency signal better meets signal strength for BT communication. A frequency of the second local oscillator signal corresponds to a frequency band for BT communication. Any one of the foregoing filters may filter the radio frequency signal received by the second antenna 12, so that a frequency band of the radio frequency signal meets a frequency band for BT communication. Other explanations, descriptions, and beneficial effects are the same as those described in the foregoing description that the short-range wireless communication baseband circuit 40 is a Wi-Fi baseband circuit. Details are not described herein again.

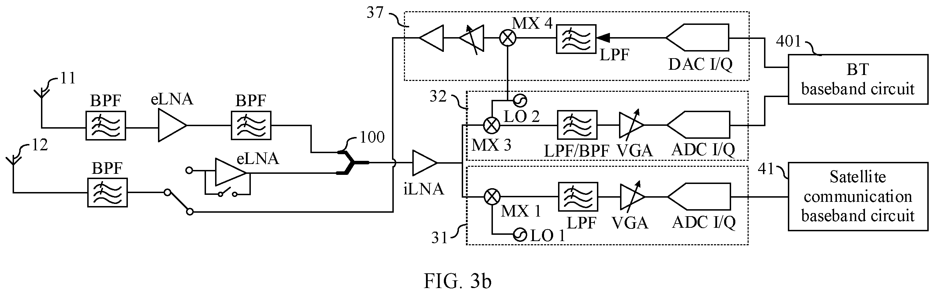

In some possible implementations, as shown in FIG. 3b, the terminal device may further include a first baseband transmit circuit 37 and a third radio frequency front-end circuit 23. An input end of the first baseband transmit circuit 37 is electrically connected to the short-range wireless communication baseband circuit 40, and an output end of the first baseband transmit circuit 37 is electrically connected to the third radio frequency front-end circuit 23, to receive a fourth baseband signal sent by the short-range wireless communication baseband circuit 40. The first baseband transmit circuit 37 includes a DAC, a built-in frequency mixer, a built-in amplifier, and the like. Amplification, filtering, and frequency mixing processing may be performed on the fourth baseband signal through the DAC, the built-in frequency mixer, and the built-in amplifier, to obtain a third radio frequency signal, where a frequency band and signal strength of the third radio frequency signal meet a frequency band and signal strength for BT communication. Then, the third radio frequency signal is transmitted through the third radio frequency front-end circuit 23.

Herein, the third radio frequency front-end circuit 23 or the second radio frequency front-end circuit 22 may be electrically connected to the second antenna 12 through a gating switch. In this way, when the third radio frequency front-end circuit 23 is electrically connected to the second antenna 12 through the gating switch, the third radio frequency front-end circuit 23 may transmit, through the second antenna 12, the third radio frequency signal for BT communication; and when the second radio frequency front-end circuit 22 is electrically connected to the second antenna 12 through the gating switch, the second radio frequency front-end circuit 22 may receive, through the second antenna 12, a radio frequency signal for BT communication.

In some possible implementations, the first baseband transmit circuit 37 electrically connected to the short-range wireless communication baseband circuit 40 may be integrated on a same chip with the satellite communication baseband circuit 41, the short-range wireless communication baseband circuit 40, the first radio frequency receive circuit 31, the second radio frequency receive circuit 32, and the input circuit 100, to further improve product integration of the terminal device and reduce board-level cabling to reduce board-level costs.

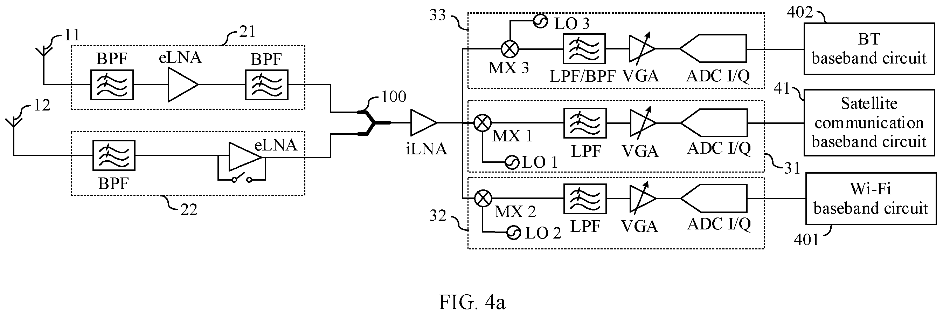

In some embodiments, as shown in FIG. 4a, the short-range wireless communication baseband circuit 40 may include a first short-range wireless communication baseband circuit 401 and a second short-range wireless communication baseband circuit 402, and the terminal device may further include a third radio frequency receive circuit 33. The other of the first radio frequency receive circuit 31 and the second radio frequency receive circuit 32 is configured to: process the received second radio frequency signal into a second baseband signal, and send the second baseband signal to the first short-range wireless communication baseband circuit 401. The third radio frequency receive circuit 33 is configured to: process the received second radio frequency signal into a third baseband signal and send the third baseband signal to the second short-range wireless communication baseband circuit 402. For ease of description, in this embodiment, an example in which the first short-range wireless communication baseband circuit 401 is used for Wi-Fi communication and the second short-range wireless communication baseband circuit 402 is used for BT communication is used for description.

As mentioned above, because both a frequency band range of Wi-Fi (for example, 2.4G Wi-Fi) communication and a frequency band range of BT communication are 2400 MHz to 2483.5 MHz, the second radio frequency receive circuit 32 and the third radio frequency receive circuit 33 may share the second antenna 12 and the second radio frequency front-end circuit 22, to receive the second radio frequency signal through the input circuit 100. In this way, the first radio frequency receive circuit 31, the second radio frequency receive circuit 32, and the third radio frequency receive circuit 33 that are electrically connected to the same output end of the input circuit 100 are integrated on a same chip, to improve product integration of the terminal device and reduce board-level cabling to reduce board-level costs.

Then, the second radio frequency receive circuit 32 may perform frequency mixing, amplification, filtering, and analog-to-digital conversion on the second radio frequency signal to obtain a second baseband signal for Wi-Fi communication, and send the second baseband signal to the first short-range wireless communication baseband circuit 401. The third radio frequency receive circuit 33 performs frequency mixing, amplification, filtering, and analog-to-digital conversion on the second radio frequency signal to obtain a third baseband signal for BT communication, and sends the third baseband signal to the second short-range wireless communication baseband circuit 402.

A process in which the first radio frequency signal is transmitted from the first radio frequency front-end circuit 21, the input circuit 100, and the first radio frequency receive circuit 31 to the satellite communication baseband circuit 41, a process in which the second radio frequency signal is transmitted from the second radio frequency front-end circuit 22, the input circuit 100, and the second radio frequency receive circuit 32 to the first short-range wireless communication baseband circuit 401, and a process in which the second radio frequency signal is transmitted from the second radio frequency front-end circuit 22, the input circuit 100, and the third radio frequency receive circuit 33 to the second short-range wireless communication baseband circuit 402 do not interfere with each other. Therefore, satellite communication, Wi-Fi communication, and BT communication may further be performed simultaneously.

In addition, in this embodiment of this application, the satellite communication baseband circuit 41, the first short-range wireless communication baseband circuit 401, and the second short-range wireless communication baseband circuit 402 may be further integrated on a same chip with the first radio frequency receive circuit 31, the second radio frequency receive circuit 32, the third radio frequency receive circuit 33, and the input circuit 100, to further improve product integration of the terminal device and reduce board-level cabling to reduce board-level costs.

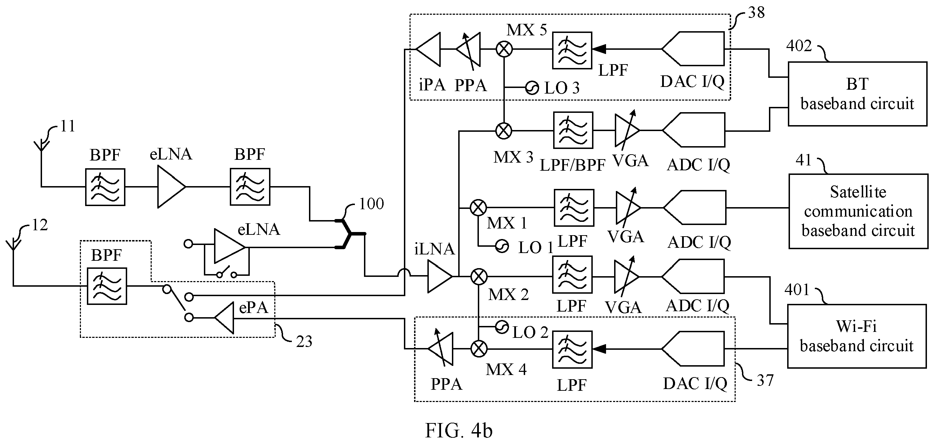

In some possible implementations, as shown in FIG. 4b, the terminal device may further include the first baseband transmit circuit 37, a second baseband transmit circuit 38, and the third radio frequency front-end circuit 23.

An input end of the first baseband transmit circuit 37 is electrically connected to the first short-range wireless communication baseband circuit 401, and an output end of the first baseband transmit circuit 37 is electrically connected to the third radio frequency front-end circuit 23, to receive a fourth baseband signal sent by the first short-range wireless communication baseband circuit 401. The first baseband transmit circuit 37 includes a DAC, a built-in frequency mixer, a built-in amplifier, and the like. Amplification, filtering, and frequency mixing processing may be performed on the fourth baseband signal through the DAC, the built-in frequency mixer, and the built-in amplifier, to obtain a third radio frequency signal, where a frequency band and signal strength of the third radio frequency signal meet a frequency band and signal strength for Wi-Fi communication. Then, the third radio frequency signal is transmitted through the third radio frequency front-end circuit 23.

An input end of the second baseband transmit circuit 38 is electrically connected to the second short-range wireless communication baseband circuit 402, and an output end of the second baseband transmit circuit 38 is electrically connected to the third radio frequency front-end circuit 23, to receive a fifth baseband signal sent by the second short-range wireless communication baseband circuit 402. The second baseband transmit circuit 38 includes a DAC, a built-in frequency mixer, a built-in amplifier, and the like. Amplification, filtering, and frequency mixing processing may be performed on the fifth baseband signal through the DAC, the built-in frequency mixer, and the built-in amplifier, to obtain a fourth radio frequency signal, where a frequency band and signal strength of the fourth radio frequency signal meet a frequency band and signal strength for BT communication. Then, the fourth radio frequency signal is transmitted through the third radio frequency front-end circuit 23.

Herein, the third radio frequency front-end circuit 23 may include a first front-end branch and a second front-end branch. The first front-end branch is electrically connected to the first baseband transmit circuit 37, and the second front-end branch is electrically connected to the second baseband transmit circuit 38. The first front-end branch, the second front-end branch, or the second radio frequency front-end circuit 22 may be electrically connected to the second antenna 12 through a gating switch. In this way, when the first front-end branch is electrically connected to the second antenna 12 through the gating switch, the first front-end branch may transmit, through the second antenna 12, a third radio frequency signal for Wi-Fi communication; and when the second front-end branch is electrically connected to the second antenna 12 through the gating switch, the second front-end branch may transmit, through the second antenna 12, a fourth radio frequency signal for BT communication. Both a frequency band range of Wi-Fi (for example, 2.4G Wi-Fi) communication and a frequency band range of BT communication are 2400 MHz to 2483.5 MHz, and therefore, when the second radio frequency front-end circuit 22 is electrically connected to the second antenna 12 through the gating switch, the second radio frequency front-end circuit 22 may receive, through the second antenna 12, a radio frequency signal for Wi-Fi/BT communication.

In some possible implementations, the first baseband transmit circuit 37 electrically connected to the first short-range wireless communication baseband circuit 401 and the second baseband transmit circuit 38 electrically connected to the second short-range wireless communication baseband circuit 402 may be integrated on a same chip with the foregoing satellite communication baseband circuit 41, the first short-range wireless communication baseband circuit 401, the second short-range wireless communication baseband circuit 402, the first radio frequency receive circuit 31, the second radio frequency receive circuit 32, the third radio frequency receive circuit 33, and the input circuit 100, to further improve product integration of the terminal device and reduce board-level cabling to reduce board-level costs.

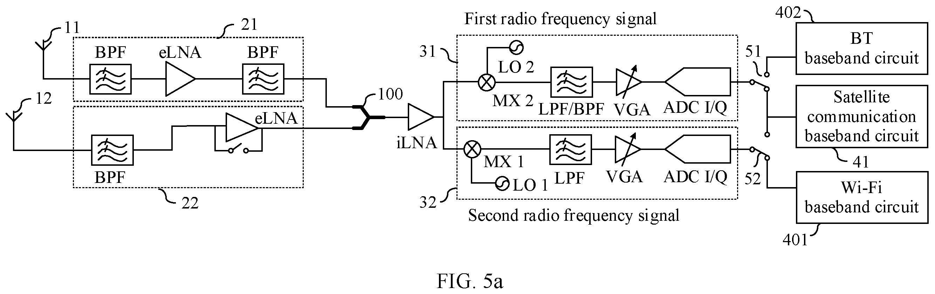

In another embodiment, as shown in FIG. 5a, the terminal device includes the first radio frequency front-end circuit 21, the second radio frequency front-end circuit 22, the input circuit 100, the first radio frequency receive circuit 31, the second radio frequency receive circuit 32, the satellite communication baseband circuit 41, and the short-range wireless communication baseband circuit 40. The input circuit 100 is configured to: receive a first radio frequency signal sent by the first radio frequency front-end circuit 21 and a second radio frequency signal sent by the second radio frequency front-end circuit 22, and output the first radio frequency signal and the second radio frequency signal through a same branch.

One of the first radio frequency receive circuit 31 and the second radio frequency receive circuit 32 is configured to: process the received first radio frequency signal into a first baseband signal, and send the first baseband signal to the satellite communication baseband circuit 41. The other of the first radio frequency receive circuit 31 and the second radio frequency receive circuit 32 is configured to: process the received second radio frequency signal into a second baseband signal, and send the second baseband signal to the short-range wireless communication baseband circuit 40. The short-range wireless communication baseband circuit 40 includes the first short-range wireless communication baseband circuit 401 and the second short-range wireless communication baseband circuit 402.

On this basis, the terminal device may further include a first selector switch 51 and a second selector switch 52. The first radio frequency receive circuit 31 is electrically connected to the satellite communication baseband circuit 41 or the second short-range wireless communication baseband circuit 402 through the first selector switch 51. In this way, the first radio frequency receive circuit 31 may be reused for the satellite communication baseband circuit 41 and the second short-range wireless communication baseband circuit 402.

The second radio frequency receive circuit 32 is electrically connected to the first short-range wireless communication baseband circuit 401 or the satellite communication baseband circuit 41 through the second selector switch 52. In this way, the second radio frequency receive circuit 32 may be reused for the satellite communication baseband circuit 41 and the first short-range wireless communication baseband circuit 401.

For ease of description, in this embodiment, an example in which the first short-range wireless communication baseband circuit 401 is a Wi-Fi baseband circuit and the second short-range wireless communication baseband circuit 402 is a BT baseband circuit is used for description.

The terminal device may include three working states. In a first working state, Wi-Fi communication and satellite communication are performed simultaneously. In a second working state, BT communication and satellite communication are performed simultaneously. In a third working state, satellite communication is performed. The following describes the three working states in detail.

### First working state:

As shown in FIG. 5a, the terminal device may further include the first antenna 11 and the second antenna 12. The first antenna 11 and the second antenna 12 are configured to receive radio frequency signals, and the radio frequency signals may be processed for satellite communication and Wi-Fi communication. Because a signal frequency band of a signal for satellite communication is different from a signal frequency band of a signal for Wi-Fi communication, the first antenna 11 and the second antenna 12 are electrically connected to different front-end circuits. Specifically, the first antenna 11 may be electrically connected to the first radio frequency front-end circuit 21, and is configured to send a radio frequency signal to the first radio frequency front-end circuit 21. The second antenna 12 may be electrically connected to the second radio frequency front-end circuit 22, and is configured to send a radio frequency signal to the second radio frequency front-end circuit 22.

As shown in FIG. 5a, the first radio frequency front-end circuit 21 may include an external filter, an external amplifier, and the like. After receiving a radio frequency signal, the first radio frequency front-end circuit 21 may filter the radio frequency signal through the external filter, to filter a frequency band of the radio frequency signal to a frequency band for satellite communication, and filter out out-of-band interference. Alternatively, the radio frequency signal may be amplified through the external amplifier, so that signal strength of the amplified radio frequency signal meets signal strength for satellite communication. The filtered and amplified radio frequency signal may be referred to as the first radio frequency signal. The external filter may include, for example, at least one BPF, and the external amplifier may include at least one LNA.

Still refer to FIG. 5a. The second radio frequency front-end circuit 22 may also include an external filter, an external amplifier, and the like. After receiving a radio frequency signal, the second radio frequency front-end circuit 22 may filter the radio frequency signal through the external filter, to filter a frequency band of the radio frequency signal to a frequency band for Wi-Fi communication, and filter out out-of-band interference. Alternatively, the radio frequency signal may be amplified through the external amplifier, so that signal strength of the amplified radio frequency signal meets signal strength for Wi-Fi communication. The filtered and amplified radio frequency signal may be referred to as the second radio frequency signal. The external filter may include, for example, at least one BPF, and the external amplifier may include at least one LNA.

A downlink S band of satellite communication is close to a downlink frequency band of Wi-Fi communication, and received radio frequency signals are similar in feature, so that the first radio frequency signal used to form a satellite communication baseband signal and the second radio frequency signal used to form a Wi-Fi baseband signal may share the same input circuit 100. In other words, an input end of the input circuit 100 is electrically connected to the first radio frequency front-end circuit 21 and the second radio frequency front-end circuit 22 separately, to receive the first radio frequency signal sent by the first radio frequency front-end circuit 21 and the second radio frequency signal sent by the second radio frequency front-end circuit 22. In addition, an output end of the input circuit 100 is electrically connected to the first radio frequency receive circuit 31 and the second radio frequency receive circuit 32 separately, to send the first radio frequency signal to the first radio frequency receive circuit 31 and send the second radio frequency signal to the second radio frequency receive circuit 32 through the same output end. In this way, the first radio frequency receive circuit 31 and the second radio frequency receive circuit 32 that are electrically connected to the same output end of the input circuit 100 are integrated on a same chip, to improve product integration of the terminal device and reduce board-level cabling to reduce board-level costs.

In some possible implementations, the input circuit 100 may also be integrated with the first radio frequency receive circuit 31 and the second radio frequency receive circuit 32 on a same chip, to further improve product integration of the terminal device and reduce board-level cabling to reduce board-level costs.

A specific circuit structure of the input circuit 100 is not limited in embodiments of this application, provided that the input circuit 100 includes two input ends and one output end, to receive the first radio frequency signal and the second radio frequency signal through the two input ends respectively, and output the first radio frequency signal and the second radio frequency signal through the one output end. Optionally, the input circuit 100 may be a combiner.

As shown in FIG. 5a, the first radio frequency receive circuit 31 may include a first frequency mixer MX 1, a built-in filter, an iLNA, a built-in VGA, an ADC, and the like. The terminal device may further include a first local oscillator circuit LO 1. A parameter of each component in the first radio frequency receive circuit 31 may be configured, to ensure that the first radio frequency receive circuit 31 receives a first radio frequency signal of a specific strength within a correct frequency band range. After receiving the first radio frequency signal, the first radio frequency receive circuit 31 may further amplify the first radio frequency signal through the built-in LNA, so that signal strength of the amplified first radio frequency signal better meets signal strength for satellite communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal is set to be corresponding to a frequency band for satellite communication. Alternatively, the built-in filter may be used to filter the baseband signal obtained by performing frequency mixing through the first frequency mixer MX 1, so that a frequency band of the baseband signal better meets a frequency band for satellite communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain the first baseband signal. The built-in filter may be an LPF.

The first radio frequency receive circuit 31 is controlled to be electrically connected to the satellite communication baseband circuit 41 through the first selector switch 51, so that the first radio frequency receive circuit 31 sends the first baseband signal to the satellite communication baseband circuit 41 through the first selector switch 51. In addition, providing of an enabling signal for the second short-range wireless communication baseband circuit 402 may be further stopped, so that the second short-range wireless communication baseband circuit 402 suspends working.

Still refer to FIG. 5a. The second radio frequency receive circuit 32 may include a second frequency mixer MX 2, a built-in filter, an iLNA, a built-in VGA, an ADC, and the like. The terminal device may further include a second local oscillator circuit LO 2. A parameter of each component in the second radio frequency receive circuit 32 may be configured, to ensure that the second radio frequency receive circuit 32 receives a second radio frequency signal of a specific strength within a correct frequency band range. After receiving the second radio frequency signal, the second radio frequency receive circuit 32 may further amplify the second radio frequency signal through the iLNA, so that signal strength of the amplified second radio frequency signal better meets signal strength for Wi-Fi communication. Alternatively, the second frequency mixer MX 2 may be used to perform frequency mixing on the second radio frequency signal and a second local oscillator signal provided by the second local oscillator circuit LO 2, to obtain a baseband signal. A frequency of the second local oscillator signal is set to be corresponding to a frequency band for Wi-Fi communication. Alternatively, the built-in filter may be used to filter the baseband signal obtained by performing frequency mixing through the second frequency mixer MX 2, so that a frequency band of the baseband signal better meets a frequency band for Wi-Fi communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain the second baseband signal. The built-in filter may be an LPF.

The second radio frequency receive circuit 32 is controlled to be electrically connected to the first short-range wireless communication baseband circuit 401 through the second selector switch 52, so that the second radio frequency receive circuit 32 sends the second baseband signal to the first short-range wireless communication baseband circuit 401 through the second selector switch 52.

A process in which the first radio frequency signal is transmitted from the first radio frequency front-end circuit 21, the input circuit 100, the first radio frequency receive circuit 31, and the first selector switch 51 to the satellite communication baseband circuit 41 and a process in which the second radio frequency signal is transmitted from the second radio frequency front-end circuit 22, the input circuit 100, the second radio frequency receive circuit 32, and the second selector switch 52 to the first short-range wireless communication baseband circuit 401 do not interfere with each other. In other words, in the process in which the first radio frequency signal is transmitted to the satellite communication baseband circuit 41, transmission of the second radio frequency signal to the first short-range wireless communication baseband circuit 401 is not affected. Alternatively, in the process in which the second radio frequency signal is transmitted to the first short-range wireless communication baseband circuit 401, transmission of the first radio frequency signal to the satellite communication baseband circuit 41 is not affected. Therefore, satellite communication and Wi-Fi communication may further be performed simultaneously.

In addition, in this embodiment of this application, the satellite communication baseband circuit 41 and the first short-range wireless communication baseband circuit 401 may be further integrated on a same chip with the first radio frequency receive circuit 31, the second radio frequency receive circuit 32, the first selector switch 51, the second selector switch 52, and the input circuit 100, to further improve product integration of the terminal device and reduce board-level cabling to reduce board-level costs.

In some possible implementations, as shown in FIG. 5a, the iLNA of the first radio frequency receive circuit 31 and the iLNA of the second radio frequency receive circuit 32 may be shared, to save a layout area of the terminal device. After being amplified by the same iLNA, the first radio frequency signal and the second radio frequency signal are respectively input to the first frequency mixer MX 1 and the second frequency mixer MX 2.

### Second working state:

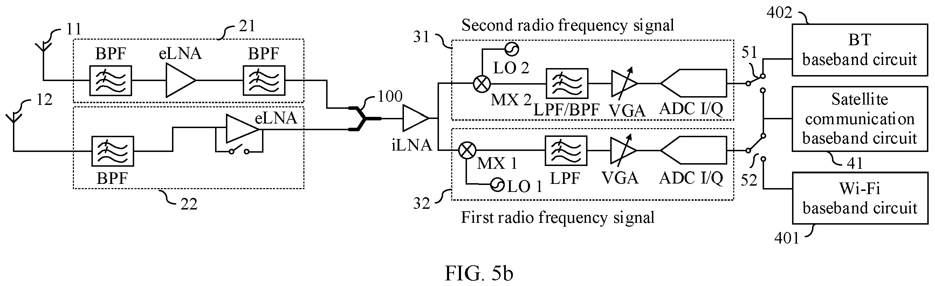

As shown in FIG. 5b, the terminal device may further include the first antenna 11 and the second antenna 12. The first antenna 11 and the second antenna 12 are configured to receive radio frequency signals, and the radio frequency signals may be processed for satellite communication and Wi-Fi communication. Because a signal frequency band of a signal for satellite communication is different from a signal frequency band of a signal for Wi-Fi communication, the first antenna 11 and the second antenna 12 are electrically connected to different front-end circuits. Specifically, the first antenna 11 may be electrically connected to the first radio frequency front-end circuit 21, and is configured to send a radio frequency signal to the first radio frequency front-end circuit 21. The second antenna 12 may be electrically connected to the second radio frequency front-end circuit 22, and is configured to send a radio frequency signal to the second radio frequency front-end circuit 22.

As shown in FIG. 5b, the second radio frequency front-end circuit 22 may include an external filter, an external amplifier, and the like. After receiving a radio frequency signal, the second radio frequency front-end circuit 22 may filter the radio frequency signal through the external filter, to filter a frequency band of the radio frequency signal to a frequency band for BT communication, and filter out out-of-band interference. Alternatively, the radio frequency signal may be amplified through the external amplifier, so that signal strength of the amplified radio frequency signal meets signal strength for BT communication. The filtered and amplified radio frequency signal may be referred to as the second radio frequency signal. The external filter may include, for example, at least one BPF, and the external amplifier may include at least one LNA.

Still refer to FIG. 5b. The first radio frequency front-end circuit 21 may also include an external filter, an external amplifier, and the like. After receiving a radio frequency signal, the first radio frequency front-end circuit 21 may filter the radio frequency signal through the external filter, to filter a frequency band of the radio frequency signal to a frequency band for satellite communication, and filter out out-of-band interference. Alternatively, the radio frequency signal may be amplified through the external amplifier, so that signal strength of the amplified radio frequency signal meets signal strength for satellite communication. The filtered and amplified radio frequency signal may be referred to as the first radio frequency signal. The external filter may include, for example, at least one BPF, and the external amplifier may include at least one LNA.

A downlink S band of satellite communication is close to a frequency band of BT communication, and received radio frequency signals are similar in feature, so that the second radio frequency signal used to form a BT baseband signal and the first radio frequency signal used to form a satellite communication baseband signal may share the same input circuit 100. In other words, an input end of the input circuit 100 is electrically connected to the first radio frequency front-end circuit 21 and the second radio frequency front-end circuit 22 separately, to receive the second radio frequency signal sent by the second radio frequency front-end circuit 22 and the first radio frequency signal sent by the first radio frequency front-end circuit 21. In addition, an output end of the input circuit 100 is electrically connected to the first radio frequency receive circuit 31 and the second radio frequency receive circuit 32 separately, to send the second radio frequency signal to the first radio frequency receive circuit 31 and send the first radio frequency signal to the second radio frequency receive circuit 32 through the same output end. In this way, the first radio frequency receive circuit 31 and the second radio frequency receive circuit 32 that are electrically connected to the same output end of the input circuit 100 are integrated on a same chip, to improve product integration of the terminal device and reduce board-level cabling to reduce board-level costs.

In some possible implementations, the input circuit 100 may also be integrated with the first radio frequency receive circuit 31 and the second radio frequency receive circuit 32 on a same chip, to further improve product integration of the terminal device and reduce board-level cabling to reduce board-level costs.

A specific circuit structure of the input circuit 100 is not limited in embodiments of this application, provided that the input circuit 100 includes two input ends and one output end, to receive the first radio frequency signal and the second radio frequency signal through the two input ends respectively, and output the first radio frequency signal and the second radio frequency signal through the one output end. Optionally, the input circuit 100 may be a combiner.

As shown in FIG. 5b, the first radio frequency receive circuit 31 may include a first frequency mixer MX 1, a built-in filter, an iLNA, a built-in VGA, an ADC, and the like. The terminal device may further include a first local oscillator circuit LO 1. A parameter of each component in the first radio frequency receive circuit 31 may be configured, to ensure that the first radio frequency receive circuit 31 receives a first radio frequency signal of a specific strength within a correct frequency band range. After receiving the second radio frequency signal, the first radio frequency receive circuit 31 may further amplify the second radio frequency signal through the built-in LNA, so that signal strength of the amplified second radio frequency signal better meets signal strength for BT communication. Alternatively, the first frequency mixer MX 1 may be used to perform frequency mixing on the second radio frequency signal and a first local oscillator signal provided by the first local oscillator circuit LO 1, to obtain a baseband signal. A frequency of the first local oscillator signal is set to be corresponding to a frequency band for BT communication. Alternatively, the built-in filter may be used to filter the baseband signal obtained by performing frequency mixing through the first frequency mixer MX 1, so that a frequency band of the baseband signal better meets a frequency band for BT communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain the second baseband signal. The built-in filter may be an LPF.

The first radio frequency receive circuit 31 is controlled to be electrically connected to the second short-range wireless communication baseband circuit 402 through the first selector switch 51, so that the first radio frequency receive circuit 31 sends the second baseband signal to the second short-range wireless communication baseband circuit 402 through the first selector switch 51.

Still refer to FIG. 5b. The second radio frequency receive circuit 32 may include a second frequency mixer MX 2, a built-in filter, an iLNA, a built-in VGA, an ADC, and the like. The terminal device may further include a second local oscillator circuit LO 2. A parameter of each component in the second radio frequency receive circuit 32 may be configured, to ensure that the second radio frequency receive circuit 32 receives a second radio frequency signal of a specific strength within a correct frequency band range. After receiving the first radio frequency signal, the second radio frequency receive circuit 32 may further amplify the first radio frequency signal through the iLNA, so that signal strength of the amplified first radio frequency signal better meets signal strength for satellite communication. Alternatively, the second frequency mixer MX 2 may be used to perform frequency mixing on the first radio frequency signal and a second local oscillator signal provided by the second local oscillator circuit LO 2, to obtain a baseband signal. A frequency of the second local oscillator signal is set to be corresponding to a frequency band for satellite communication. Alternatively, the built-in filter may be used to filter the baseband signal obtained by performing frequency mixing through the second frequency mixer MX 2, so that a frequency band of the baseband signal better meets a frequency band for satellite communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain the first baseband signal. The built-in filter may be an LPF.

The second radio frequency receive circuit 32 is controlled to be electrically connected to the satellite communication baseband circuit 41 through the second selector switch 52, so that the second radio frequency receive circuit 32 sends the first baseband signal to the satellite communication baseband circuit 41 through the second selector switch 52. In addition, providing of an enabling signal for the first short-range wireless communication baseband circuit 401 may be further stopped, so that the first short-range wireless communication baseband circuit 401 suspends working.

A process in which the second radio frequency signal is transmitted from the second radio frequency front-end circuit 22, the input circuit 100, the first radio frequency receive circuit 31, and the first selector switch 51 to the second short-range wireless communication baseband circuit 402 and a process in which the first radio frequency signal is transmitted from the first radio frequency front-end circuit 21, the input circuit 100, the second radio frequency receive circuit 32, and the second selector switch 52 to the satellite communication baseband circuit 41 do not interfere with each other. In other words, in the process in which the first radio frequency signal is transmitted to the satellite communication baseband circuit 41, transmission of the second radio frequency signal to the second short-range wireless communication baseband circuit 402 is not affected. Alternatively, in the process in which the second radio frequency signal is transmitted to the second short-range wireless communication baseband circuit 402, transmission of the first radio frequency signal to the satellite communication baseband circuit 41 is not affected. Therefore, satellite communication and BT communication may further be performed simultaneously.

In addition, in this embodiment of this application, the satellite communication baseband circuit 41 and the first short-range wireless communication baseband circuit 401 may be further integrated on a same chip with the first radio frequency receive circuit 31, the second radio frequency receive circuit 32, the first selector switch 51, the second selector switch 52, and the input circuit 100, to further improve product integration of the terminal device and reduce board-level cabling to reduce board-level costs.

In some possible implementations, as shown in FIG. 5b, the iLNA of the first radio frequency receive circuit 31 and the iLNA of the second radio frequency receive circuit 32 may be shared, to save a layout area of the terminal device. After being amplified by the same iLNA, the first radio frequency signal and the second radio frequency signal are respectively input to the first frequency mixer MX 1 and the second frequency mixer MX 2.

### Third working state:

In case 1, as in the first working state, the first radio frequency receive circuit 31 is controlled to be electrically connected to the satellite communication baseband circuit 41 through the first selector switch 51, so that the first radio frequency receive circuit 31 sends the first baseband signal to the satellite communication baseband circuit 41 through the first selector switch 51. In addition, providing of an enabling signal for the first short-range wireless communication baseband circuit 401 may be further stopped, so that the first short-range wireless communication baseband circuit 401 suspends working. Providing of an enabling signal for the second short-range wireless communication baseband circuit 402 may be stopped, so that the second short-range wireless communication baseband circuit 402 suspends working. In this case, working processes, integration locations, and corresponding beneficial effects of the first radio frequency front-end circuit 21, the first radio frequency receive circuit 31, the first selector switch 51, and the satellite communication baseband circuit 41 are the same as those in the first working state. Details are not described herein again.

In case 2, as in the second working state, the second radio frequency receive circuit 32 is controlled to be electrically connected to the satellite communication baseband circuit 41 through the second selector switch 52, so that the second radio frequency receive circuit 32 sends the first baseband signal to the satellite communication baseband circuit 41 through the second selector switch 52. In addition, providing of an enabling signal for the first short-range wireless communication baseband circuit 401 may be further stopped, so that the first short-range wireless communication baseband circuit 401 suspends working. Providing of an enabling signal for the second short-range wireless communication baseband circuit 402 may be stopped, so that the second short-range wireless communication baseband circuit 402 suspends working. In this case, working processes, integration locations, and corresponding beneficial effects of the first radio frequency front-end circuit 21, the second radio frequency receive circuit 32, the second selector switch 52, and the satellite communication baseband circuit 41 are the same as those in the second working state. Details are not described herein again.

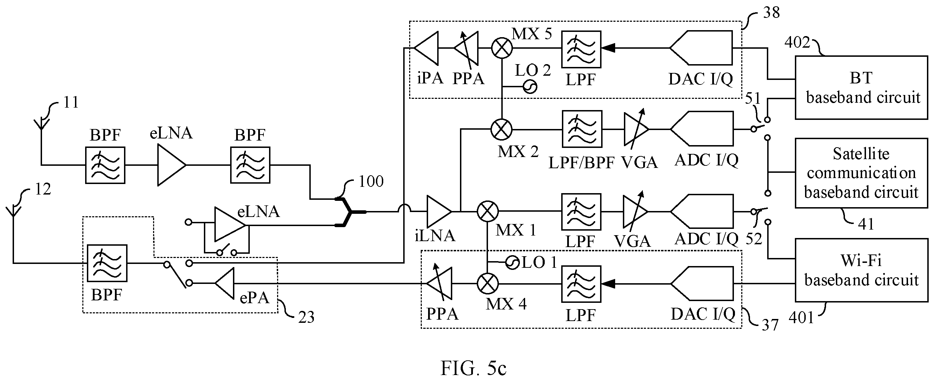

In some embodiments, in some possible implementations, as shown in FIG. 5c, the terminal device may further include the first baseband transmit circuit 37, the second baseband transmit circuit 38, and the third radio frequency front-end circuit 23.

An input end of the first baseband transmit circuit 37 is electrically connected to the first short-range wireless communication baseband circuit 401, and an output end of the first baseband transmit circuit 37 is electrically connected to the third radio frequency front-end circuit 23, to receive a fourth baseband signal sent by the first short-range wireless communication baseband circuit 401. The first baseband transmit circuit 37 includes a DAC, a built-in frequency mixer, a built-in amplifier, and the like. Amplification, filtering, and frequency mixing processing may be performed on the fourth baseband signal through the DAC, the built-in frequency mixer, and the built-in amplifier, to obtain a third radio frequency signal, where a frequency band and signal strength of the third radio frequency signal meet a frequency band and signal strength for Wi-Fi communication. Then, the third radio frequency signal is transmitted through the third radio frequency front-end circuit 23.

An input end of the second baseband transmit circuit 38 is electrically connected to the second short-range wireless communication baseband circuit 402, and an output end of the second baseband transmit circuit 38 is electrically connected to the third radio frequency front-end circuit 23, to receive a fifth baseband signal sent by the second short-range wireless communication baseband circuit 402. The second baseband transmit circuit 38 includes a DAC, a built-in frequency mixer, a built-in amplifier, and the like. Amplification, filtering, and frequency mixing processing may be performed on the fifth baseband signal through the DAC, the built-in frequency mixer, and the built-in amplifier, to obtain a fourth radio frequency signal, where a frequency band and signal strength of the fourth radio frequency signal meet a frequency band and signal strength for BT communication. Then, the fourth radio frequency signal is transmitted through the third radio frequency front-end circuit 23.

Herein, the third radio frequency front-end circuit 23 may include a first front-end branch and a second front-end branch. The first front-end branch is electrically connected to the first baseband transmit circuit 37, and the second front-end branch is electrically connected to the second baseband transmit circuit 38. The first front-end branch, the second front-end branch, or the second radio frequency front-end circuit 22 may be electrically connected to the second antenna 12 through a gating switch. In this way, when the first front-end branch is electrically connected to the second antenna 12 through the gating switch, the first front-end branch may transmit, through the second antenna 12, a third radio frequency signal for Wi-Fi communication; and when the second front-end branch is electrically connected to the second antenna 12 through the gating switch, the second front-end branch may transmit, through the second antenna 12, a fourth radio frequency signal for BT communication. Both a frequency band range of Wi-Fi (for example, 2.4G Wi-Fi) communication and a frequency band range of BT communication are 2400 MHz to 2483.5 MHz, and therefore, when the second radio frequency front-end circuit 22 is electrically connected to the second antenna 12 through the gating switch, the second radio frequency front-end circuit 22 may receive, through the second antenna 12, a radio frequency signal for Wi-Fi/BT communication.

In some possible implementations, the first baseband transmit circuit 37 electrically connected to the first short-range wireless communication baseband circuit 401 and the second baseband transmit circuit 38 electrically connected to the second short-range wireless communication baseband circuit 402 may be integrated on a same chip with the foregoing satellite communication baseband circuit 41, the first short-range wireless communication baseband circuit 401, the second short-range wireless communication baseband circuit 402, the first radio frequency receive circuit 31, the second radio frequency receive circuit 32, the third radio frequency receive circuit 33, and the input circuit 100, to further improve product integration of the terminal device and reduce board-level cabling to reduce board-level costs.

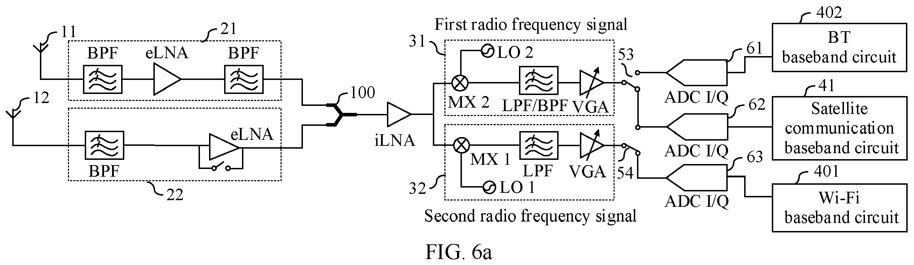

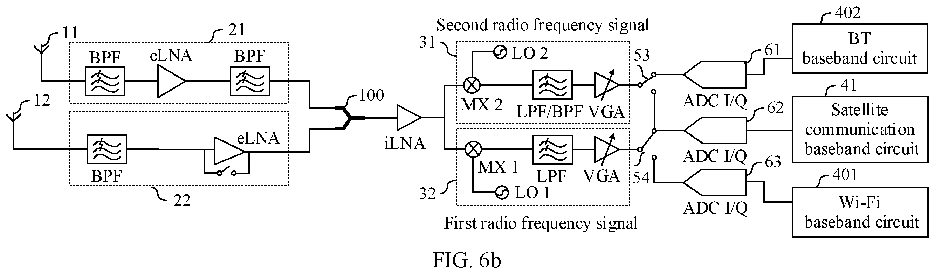

In another embodiment, as shown in FIG. 6a and FIG. 6b, the terminal device includes the first radio frequency front-end circuit 21, the second radio frequency front-end circuit 22, the input circuit 100, the first radio frequency receive circuit 31, the second radio frequency receive circuit 32, the satellite communication baseband circuit 41, and the short-range wireless communication baseband circuit 40. The input circuit 100 is configured to: receive a first radio frequency signal sent by the first radio frequency front-end circuit 21 and a second radio frequency signal sent by the second radio frequency front-end circuit 22, and output the first radio frequency signal and the second radio frequency signal through a same branch.

One of the first radio frequency receive circuit 31 and the second radio frequency receive circuit 32 is configured to: process the received first radio frequency signal into a first baseband signal, and send the first baseband signal to the satellite communication baseband circuit 41. The other of the first radio frequency receive circuit 31 and the second radio frequency receive circuit 32 is configured to: process the received second radio frequency signal into a second baseband signal, and send the second baseband signal to the short-range wireless communication baseband circuit 40. The short-range wireless communication baseband circuit 40 includes the first short-range wireless communication baseband circuit 401 and the second short-range wireless communication baseband circuit 402.

Based on this, the terminal device further includes a third selector switch 53, a fourth selector switch 54, a first analog-to-digital conversion circuit 61, a second analog-to-digital conversion circuit 62, and a third analog-to-digital conversion circuit 63. The first radio frequency receive circuit 31 is electrically connected to an input end of the first analog-to-digital conversion circuit 61 or an input end of the second analog-to-digital conversion circuit 62 through the third selector switch 53, an output end of the first analog-to-digital conversion circuit 61 is electrically connected to the second short-range wireless communication baseband circuit 402, and an output end of the second analog-to-digital conversion circuit 62 is electrically connected to the satellite communication baseband circuit 41. In this way, the first radio frequency receive circuit 31 may be reused for the second short-range wireless communication baseband circuit and the satellite communication baseband circuit 41.

The second radio frequency receive circuit 32 is electrically connected to the input end of the second analog-to-digital conversion circuit 62 or an input end of the third analog-to-digital conversion circuit 63 through the fourth selector switch 54, and an output end of the third analog-to-digital conversion circuit 63 is electrically connected to the first short-range wireless communication baseband circuit 401. In this way, the second radio frequency receive circuit 32 may be reused for the satellite communication baseband circuit 41 and the first short-range wireless communication baseband circuit 401.

For ease of description, in this embodiment, an example in which the first short-range wireless communication baseband circuit 401 is a Wi-Fi baseband circuit and the second short-range wireless communication baseband circuit 402 is a BT baseband circuit is used for description.

A difference between this embodiment and the previous embodiment lies in that, in the previous embodiment, the first selector switch 51 is electrically connected between the first radio frequency receive circuit 31, and the second short-range wireless communication baseband circuit 402 and the satellite communication baseband circuit 41, and the second selector switch 52 is electrically connected between the second radio frequency receive circuit 32, and the first short-range wireless communication baseband circuit 401 and the satellite communication baseband circuit 41. In addition, each of the first radio frequency receive circuit 31 and the second radio frequency receive circuit 32 includes an ADC. After analog-to-digital conversion is performed on the first baseband signal and the second baseband signal, the first baseband signal and the second baseband signal are sent to the satellite communication baseband circuit 41 and the first short-range wireless communication baseband circuit 401 or the second short-range wireless communication baseband circuit 402 through the first selector switch 51 and the second selector switch 52.

In this embodiment, the terminal device further includes the first analog-to-digital conversion circuit 61, the second analog-to-digital conversion circuit 62, and the third analog-to-digital conversion circuit 63. The third selector switch 53 is electrically connected between the first radio frequency receive circuit 31 and the input end of the first analog-to-digital conversion circuit 61 or the input end of the second analog-to-digital conversion circuit 62, and the fourth selector switch 54 is electrically connected between the second radio frequency receive circuit 32 and the input end of the second analog-to-digital conversion circuit 62 or the input end of the third analog-to-digital conversion circuit 63. In addition, the output end of the first analog-to-digital conversion circuit 61 is electrically connected to the second short-range wireless communication baseband circuit 402, the output end of the second analog-to-digital conversion circuit 62 is electrically connected to the satellite communication baseband circuit 41, and the output end of the third analog-to-digital conversion circuit 63 is electrically connected to the first short-range wireless communication baseband circuit 401. In this way, the terminal device may also include three working states. In a first working state, Wi-Fi communication and satellite communication are performed simultaneously. In a second working state, BT communication and satellite communication are performed simultaneously. In a third working state, satellite communication is performed.

### First working state:

As shown in FIG. 6a, the first radio frequency receive circuit 31 is controlled to be electrically connected to the second analog-to-digital conversion circuit 62 through the third selector switch 53, so that the first radio frequency receive circuit 31 sends the first baseband signal to the satellite communication baseband circuit 41 through the third selector switch 53 and the second analog-to-digital conversion circuit 62. In addition, providing of an enabling signal for the second short-range wireless communication baseband circuit 402 may be further stopped, so that the second short-range wireless communication baseband circuit 402 suspends working.

The second radio frequency receive circuit 32 is controlled to be electrically connected to the third analog-to-digital conversion circuit 63 through the fourth selector switch 54, so that the second radio frequency receive circuit 32 sends the second baseband signal to the first short-range wireless communication baseband circuit 401 through the fourth selector switch 54 and the third analog-to-digital conversion circuit 63.

In addition, a working process, an integration position, and a corresponding beneficial effect of another circuit in the terminal device are the same as those in the first working state in the foregoing embodiment. Details are not described herein again.

### Second working state:

As shown in FIG. 6b, the first radio frequency receive circuit 31 is controlled to be electrically connected to the first analog-to-digital conversion circuit 61 through the third selector switch 53, so that the first radio frequency receive circuit 31 sends the second baseband signal to the second short-range wireless communication baseband circuit 402 through the third selector switch 53 and the first analog-to-digital conversion circuit 61.

The second radio frequency receive circuit 32 is controlled to be electrically connected to the second analog-to-digital conversion circuit 62 through the fourth selector switch 54, so that the second radio frequency receive circuit 32 sends the first baseband signal to the satellite communication baseband circuit 41 through the fourth selector switch 54 and the second analog-to-digital conversion circuit 62. In addition, providing of an enabling signal for the first short-range wireless communication baseband circuit 401 may be further stopped, so that the first short-range wireless communication baseband circuit 401 suspends working.

In addition, a working process, an integration position, and a corresponding beneficial effect of another circuit in the terminal device are the same as those in the second working state in the foregoing embodiment. Details are not described herein again.

### Third working state:

In case 1, as in the first working state, the first radio frequency receive circuit 31 is controlled to be electrically connected to the second analog-to-digital conversion circuit 62 through the third selector switch 53, so that the first radio frequency receive circuit 31 sends the first baseband signal to the satellite communication baseband circuit 41 through the third selector switch 53 and the second analog-to-digital conversion circuit 62. In addition, providing of an enabling signal for the first short-range wireless communication baseband circuit 401 may be further stopped, so that the first short-range wireless communication baseband circuit 401 suspends working. Providing of an enabling signal for the second short-range wireless communication baseband circuit 402 may be stopped, so that the second short-range wireless communication baseband circuit 402 suspends working. In this case, working processes, integration locations, and corresponding beneficial effects of the first radio frequency front-end circuit 21, the first radio frequency receive circuit 31, the third selector switch 53, and the satellite communication baseband circuit 41 are the same as those in the first working state. Details are not described herein again.

In case 2, as in the second working state, the second radio frequency receive circuit 32 is controlled to be electrically connected to the second analog-to-digital conversion circuit 62 through the fourth selector switch 54, so that the second radio frequency receive circuit 32 sends the first baseband signal to the satellite communication baseband circuit 41 through the fourth selector switch 54 and the second analog-to-digital conversion circuit 62. In addition, providing of an enabling signal for the first short-range wireless communication baseband circuit 401 may be further stopped, so that the first short-range wireless communication baseband circuit 401 suspends working. Providing of an enabling signal for the second short-range wireless communication baseband circuit 402 may be stopped, so that the second short-range wireless communication baseband circuit 402 suspends working. In this case, working processes, integration locations, and corresponding beneficial effects of the first radio frequency front-end circuit 21, the second radio frequency receive circuit 32, the fourth selector switch 54, and the satellite communication baseband circuit 41 are the same as those in the second working state. Details are not described herein again.

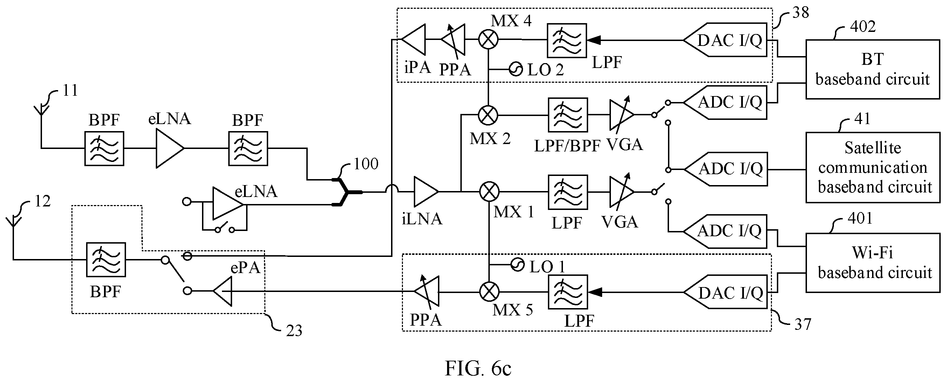

In some embodiments, as shown in FIG. 6c, the terminal device in this embodiment may also include the first baseband transmit circuit 37, the second baseband transmit circuit 38, and the third radio frequency front-end circuit 23, to transmit a third radio frequency signal and a fourth radio frequency signal. Working processes, integration locations, and corresponding beneficial effects of the first baseband transmit circuit 37, the second baseband transmit circuit 38, and the third radio frequency front-end circuit 23 are the same as those in the embodiment shown in FIG. 5c in the foregoing embodiment. Details are not described herein again.

In addition, for any one of the foregoing three embodiments, the first radio frequency front-end circuit 21, the second radio frequency front-end circuit 22, and the third radio frequency front-end circuit 23 may also be integrated on a same chip with the first radio frequency receive circuit 31, the second radio frequency receive circuit 32, the first short-range wireless communication baseband circuit 401, the second short-range wireless communication baseband circuit 402, the satellite communication baseband circuit 41, and the like, to further improve product integration of the terminal device and reduce board-level cabling to reduce board-level costs.

In the foregoing plurality of embodiments, an example in which the terminal device is a single communication system is used to describe a communication process of the terminal device. That is, a single communication system includes a receiver and a transmitter. The receiver includes the first antenna 11, the second antenna 12, the first radio frequency front-end circuit 21, the second radio frequency front-end circuit 22, the first radio frequency receive circuit 31, the second radio frequency receive circuit 32, the third radio frequency receive circuit 33, and the like. The transmitter includes the first baseband transmit circuit 37, the second baseband transmit circuit 38, the third radio frequency front-end circuit 23, the second antenna 12, and the like. The receiver and the transmitter share the second antenna 12.

In some other possible implementations, the terminal device may alternatively transmit a communication signal in a multiple-in multiple-out (multiple-in multiple-out, MIMO) manner. There are a plurality of receivers and a plurality of transmitters in the terminal device. The plurality of receivers and the plurality of transmitters are all electrically connected to the foregoing satellite communication baseband circuit 41 and short-range wireless communication baseband circuit 40. Circuit structures and working principles of the plurality of receivers are the same as the circuit structure and working principle of the single receiver in any one of the foregoing embodiments, and circuit structures and working principles of the plurality of transmitters are the same as the circuit structure and working principle of the single transmitter in any one of the foregoing embodiments. Details are not described herein again.

A plurality of first radio frequency receive circuits 31 or a plurality of second radio frequency receive circuits 32 are configured to send the first baseband signal to a same satellite communication baseband circuit 41. The plurality of first radio frequency receive circuits 31 or the plurality of second radio frequency receive circuits 32 are configured to send the second baseband signal to a same short-range wireless communication baseband circuit 40.

A same first short-range wireless communication baseband circuit 401 is configured to output a fourth baseband signal through a plurality of first baseband transmit circuits 37, and a same second short-range wireless communication baseband circuit 402 is configured to output a fifth baseband signal through a plurality of second baseband transmit circuits 38.

The foregoing three embodiments describe a case in which a satellite communication function module and a short-range wireless communication function module like a Wi-Fi function module and a BT module are integrated on a same chip. In some other possible implementations, a satellite communication function module and a cellular function module may alternatively be integrated on a same chip.

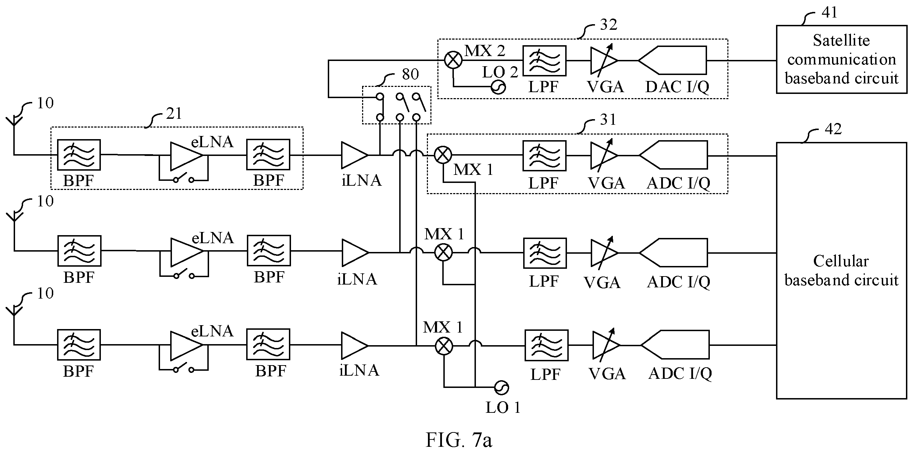

Specifically, in still another embodiment, as shown in FIG. 7a, the terminal device includes N first radio frequency front-end circuits 21, N first radio frequency receive circuits 31, the second radio frequency receive circuit 32, a switch 80, the satellite communication baseband circuit 41, and a cellular baseband circuit 42. N is a positive integer.

The N first radio frequency receive circuits 31 are in a one-to-one correspondence with and electrically connected to the N first radio frequency front-end circuits 21. Any first radio frequency receive circuit 31 is configured to: receive a first radio frequency signal sent by the first radio frequency receive circuit 21 electrically connected to the first radio frequency receive circuit 31, process the first radio frequency signal into a first baseband signal, and send the first baseband signal to the cellular baseband circuit 42.

An input side of the second radio frequency receive circuit 32 is electrically connected to an input side of at least one first radio frequency receive circuit 31 through the switch 80, and is configured to: receive the first radio frequency signal sent by at least one first radio frequency front-end circuit 21, process the first radio frequency signal into a second baseband signal, and send the second baseband signal to the satellite communication baseband circuit 41.

A communication principle of the terminal device may be implemented in the following process.

As shown in FIG. 7a, the terminal device may further include N antennas 10. The antennas 10 are configured to receive radio frequency signals. The N antennas 10 are in a one-to-one correspondence with and electrically connected to the N first radio frequency front-end circuits 21. After being processed, the radio frequency signal may be used for cellular communication and satellite communication. Because a signal frequency band of a signal for satellite communication is close to a signal frequency band of a signal for cellular communication, compared with that in the foregoing embodiment, at least one first radio frequency front-end circuit 21 for cellular communication may be reused for the satellite communication in this embodiment.

As shown in FIG. 7a, each of the N first radio frequency front-end circuits 21 may include an external filter, an external amplifier, and the like. After receiving a radio frequency signal, the first radio frequency front-end circuit 21 may filter the radio frequency signal through the external filter, to filter a frequency band of the radio frequency signal to a frequency band for satellite communication and cellular communication, and filter out out-of-band interference. Alternatively, the radio frequency signal may be amplified through the external amplifier, so that signal strength of the amplified radio frequency signal meets signal strength for satellite communication and cellular communication. The filtered and amplified radio frequency signal may be referred to as the first radio frequency signal. The external filter may include, for example, at least one BPF, and the external amplifier may include at least one LNA.

Each first radio frequency front-end circuit 21 may send the first radio frequency signal to the first radio frequency receive circuit 31 electrically connected to the first radio frequency front-end circuit 21. The first radio frequency receive circuit 31 may include a first frequency mixer MX 1, a built-in filter, an iLNA, a built-in VGA, an ADC, and the like. The terminal device may further include a first local oscillator circuit LO 1.

A parameter of each component in the first radio frequency receive circuit 31 may be configured, to ensure that the first radio frequency receive circuit 31 receives a first radio frequency signal of a specific strength within a correct frequency band range. After receiving the first radio frequency signal, the first radio frequency receive circuit 31 may further amplify the first radio frequency signal through the iLNA, so that signal strength of the amplified first radio frequency signal better meets signal strength for cellular communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal is set to be corresponding to a frequency band for cellular communication. Alternatively, the built-in filter may be used to filter the baseband signal obtained by performing frequency mixing through the first frequency mixer MX 1, so that a frequency band of the baseband signal better meets a frequency band for cellular communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain a first baseband signal, and the first baseband signal is sent to the cellular baseband circuit 42. The built-in filter may be an LPF.

A downlink S band of satellite communication is close to a downlink frequency band of cellular communication, and received radio frequency signals are close in signal strength, so that the first radio frequency signal received by the at least one first radio frequency front-end circuit 21 may be reused for satellite communication. Optionally, the second radio frequency receive circuit 32 for satellite communication may be electrically connected to the at least one first radio frequency front-end circuit 21 through the switch 80, to receive the first radio frequency signal sent by the at least one first radio frequency front-end circuit 21. In this way, the first radio frequency receive circuit 31, the first radio frequency signal of which is reused, and the second radio frequency receive circuit 32 are integrated on a same chip, to improve product integration of the terminal device and reduce board-level cabling to reduce board-level costs.

The second radio frequency receive circuit 32 may include a second frequency mixer MX 2, a built-in filter, a built-in LNA, a built-in VGA, an ADC, and the like. The terminal device may further include a second local oscillator circuit LO 2. A parameter of each component in the second radio frequency receive circuit 32 may be configured, to ensure that the second radio frequency receive circuit 32 receives a second radio frequency signal of a specific strength within a correct frequency band range. After receiving the first radio frequency signal, the second radio frequency receive circuit 32 may further amplify the first radio frequency signal through the iLNA, so that signal strength of the amplified first radio frequency signal better meets signal strength for satellite communication. Alternatively, the second frequency mixer MX 2 may be used to perform frequency mixing on the first radio frequency signal and a second local oscillator signal provided by the second local oscillator circuit LO 2, to obtain a baseband signal. A frequency of the second local oscillator signal is set to be corresponding to a frequency band for satellite communication. Alternatively, the built-in filter may be used to filter the baseband signal obtained by performing frequency mixing through the second frequency mixer MX 2, so that a frequency band of the baseband signal better meets a frequency band for satellite communication, and out-of-band interference is filtered out. Alternatively, the VGA may be used to control a gain of the baseband signal, to increase power of the baseband signal, and prevent a signal saturation phenomenon of the baseband signal. Then, a baseband signal in an analog signal form is converted into a digital signal through the ADC, to obtain a second baseband signal, and the second baseband signal is sent to the satellite communication baseband circuit 41. The built-in filter may be an LPF.

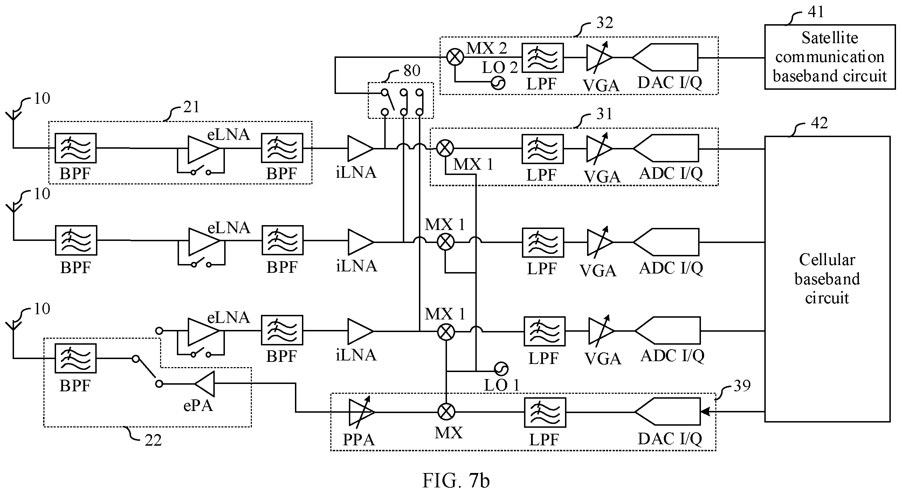

In some possible implementations, when N is a positive integer greater than 1, as shown in FIG. 7a, if the second radio frequency receive circuit 32 is electrically connected to one first radio frequency front-end circuit 21 through the switch 80, the second radio frequency receive circuit 32 may receive a first radio frequency signal sent by the one first radio frequency front-end circuit 21. In this case, the switch 80 may be a selector switch. As shown in FIG. 7b, if the second radio frequency receive circuit 32 is electrically connected to a plurality of first radio frequency front-end circuits 21 through the switch 80, the second radio frequency receive circuit 32 may receive first radio frequency signals sent by the plurality of first radio frequency front-end circuits 21. In this case, the switch 80 may include a plurality of transistors, and each transistor is electrically connected between the N first radio frequency front-end circuits 21 and the second radio frequency receive circuit 32. The plurality of transistors are turned on, so that the second radio frequency receive circuit 32 is electrically connected to the plurality of first radio frequency front-end circuits 21 through the switch 80.

Certainly, N may alternatively be 1. In this case, in a process in which the terminal device performs satellite communication, the switch 80 is turned on in real time.

In some possible implementations, when N is a positive integer greater than 1, a manner in which the second radio frequency receive circuit 32 selectively receives the first radio frequency signal sent by the at least one first radio frequency front-end circuit 21 is not limited in embodiments of this application. Optionally, the second radio frequency receive circuit 32 may be enabled to receive a stronger first radio frequency signal of N first radio frequency signals based on a smart antenna selection mechanism or a quantity of satellites found by the antenna 10. A greater quantity of satellites found by the antenna 10 indicates greater signal strength of the first radio frequency signal.

In addition, a process in which the first radio frequency signal is transmitted from the first radio frequency front-end circuit 21, and the first radio frequency receive circuit 31 to the cellular baseband circuit 42 and a process in which the second radio frequency signal is transmitted from the first radio frequency front-end circuit 21, and the second radio frequency receive circuit 32 to the satellite communication baseband circuit 41 do not interfere with each other. In other words, in the process in which the first radio frequency signal is transmitted to the satellite communication baseband circuit 41, transmission of the first radio frequency signal to the cellular baseband circuit 42 is not affected. Alternatively, in the process in which the first radio frequency signal is transmitted to the cellular baseband circuit 42, transmission of the first radio frequency signal to the satellite communication baseband circuit 41 is not affected. Therefore, satellite communication and cellular communication may further be performed simultaneously.

In addition, in this embodiment of this application, the satellite communication baseband circuit 41 and the cellular baseband circuit 42 may be further integrated on a same chip with the first radio frequency receive circuit 31 and the second radio frequency receive circuit 32, to further improve product integration of the terminal device and reduce board-level cabling to reduce board-level costs.

In some possible implementations, as shown in FIG. 7a, the iLNA of the first radio frequency receive circuit 31 and the iLNA of the second radio frequency receive circuit 32 may be shared, to save a layout area of the terminal device. After being amplified by the same iLNA, the first radio frequency signal and the second radio frequency signal are respectively input to the first frequency mixer MX 1 and the second frequency mixer MX 2.

In some embodiments, as shown in FIG. 7b, the terminal device may further include a baseband transmit branch 39 and a second radio frequency front-end circuit 22. The baseband transmit branch 39 is configured to: receive a third baseband signal sent by the cellular baseband circuit 42, process the third baseband signal into the second radio frequency signal, and transmit the second radio frequency signal through the second radio frequency front-end circuit 22.

An input end of the baseband transmit circuit 39 is electrically connected to the cellular baseband circuit 42, and an output end of the baseband transmit circuit 39 is electrically connected to the second radio frequency front-end circuit 22, so that the third baseband signal sent by the cellular baseband circuit 42 can be received. The baseband transmit circuit 39 includes a DAC, a built-in frequency mixer, a built-in amplifier, and the like. Amplification, filtering, and frequency mixing processing may be performed on the third baseband signal through the DAC, the built-in frequency mixer, and the built-in amplifier, to obtain the second radio frequency signal, where a frequency band and signal strength of the second radio frequency signal meet a frequency band and signal strength for cellular communication. Then, the second radio frequency signal is transmitted through the second radio frequency front-end circuit 22.

Herein, the second radio frequency front-end circuit 22 and one of the first radio frequency front-end circuits 21 may be electrically connected to the antenna 10 through a gating switch. In this way, when the second radio frequency front-end circuit 22 is electrically connected to the antenna 10 through the gating switch, the second radio frequency front-end circuit 22 may transmit, through the antenna 10, the second radio frequency signal for cellular communication; and when the first radio frequency front-end circuit 21 is electrically connected to the antenna 10 through the gating switch, the first radio frequency front-end circuit 21 may receive, through the antenna 10, a radio frequency signal for cellular communication.

In some possible implementations, the baseband transmit circuit 39 electrically connected to the cellular baseband circuit 42 may be integrated on a same chip with the satellite communication baseband circuit 41, the cellular baseband circuit 42, the first radio frequency receive circuit 31, and the second radio frequency receive circuit 32, to further improve product integration of the terminal device and reduce board-level cabling to reduce board-level costs.

In addition, in this embodiment, the first radio frequency front-end circuit 21 and the second radio frequency front-end circuit 22 may alternatively be integrated on a same chip with the baseband transmit circuit 39, the satellite communication baseband circuit 41, the cellular baseband circuit 42, the first radio frequency receive circuit 31, the second radio frequency receive circuit 32, and the like, to further improve product integration of the terminal device and reduce board-level cabling to reduce board-level costs.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal device, comprising a first radio frequency front-end circuit, a second radio frequency front-end circuit, an input circuit, a first radio frequency receive circuit, a second radio frequency receive circuit, a satellite communication baseband circuit, and a wireless communication baseband circuit, wherein
the input circuit is configured to: receive a first radio frequency signal sent by the first radio frequency front-end circuit and a second radio frequency signal sent by the second radio frequency front-end circuit, and output the first radio frequency signal and the second radio frequency signal through a same branch;
one of the first radio frequency receive circuit and the second radio frequency receive circuit is configured to: process the received first radio frequency signal into a first baseband signal, and send the first baseband signal to the satellite communication baseband circuit; and
the other of the first radio frequency receive circuit and the second radio frequency receive circuit is configured to: process the received second radio frequency signal into a second baseband signal, and send the second baseband signal to the wireless communication baseband circuit.

2. The terminal device according to claim 1, wherein the wireless communication baseband circuit comprises a first wireless communication baseband circuit and a second wireless communication baseband circuit; and
the first wireless communication baseband circuit is a Wi-Fi baseband circuit, and the second wireless communication baseband circuit is a Bluetooth baseband circuit; or
the first wireless communication baseband circuit is a Bluetooth baseband circuit, and the second wireless communication baseband circuit is a Wi-Fi baseband circuit.

3. The terminal device according to claim 2, wherein the terminal device further comprises a third radio frequency receive circuit;
the other of the first radio frequency receive circuit and the second radio frequency receive circuit is configured to: process the received second radio frequency signal into a second baseband signal, and send the second baseband signal to the first wireless communication baseband circuit; and
the third radio frequency receive circuit is configured to: receive the second radio frequency signal sent by the input circuit, process the second radio frequency signal into a third baseband signal, and send the third baseband signal to the second wireless communication baseband circuit.

4. The terminal device according to claim 2, wherein the terminal device further comprises a first selector switch and a second selector switch;
the first radio frequency receive circuit is electrically connected to the satellite communication baseband circuit or the second wireless communication baseband circuit through the first selector switch; and
the second radio frequency receive circuit is electrically connected to the first wireless communication baseband circuit or the satellite communication baseband circuit through the second selector switch.

5. The terminal device according to claim 2, wherein the terminal device further comprises a third selector switch, a fourth selector switch, a first analog-to-digital conversion circuit, a second analog-to-digital conversion circuit, and a third analog-to-digital conversion circuit;
the first radio frequency receive circuit is electrically connected to an input end of the first analog-to-digital conversion circuit or an input end of the second analog-to-digital conversion circuit through the third selector switch, an output end of the first analog-to-digital conversion circuit is electrically connected to the second wireless communication baseband circuit, and an output end of the second analog-to-digital conversion circuit is electrically connected to the satellite communication baseband circuit; and
the second radio frequency receive circuit is electrically connected to the input end of the second analog-to-digital conversion circuit or an input end of the third analog-to-digital conversion circuit through the fourth selector switch, and an output end of the third analog-to-digital conversion circuit is electrically connected to the first wireless communication baseband circuit.

6. The terminal device according to any one of claims 1 to 5, wherein the input circuit comprises a combiner, and the combiner comprises a first input end, a second input end, and an output end;
the first input end is electrically connected to the first radio frequency front-end circuit, and is configured to receive the first radio frequency signal;
the second input end is electrically connected to the second radio frequency front-end circuit, and is configured to receive the second radio frequency signal; and
the output end is configured to send the first radio frequency signal and the second radio frequency signal to the input circuit.

7. The terminal device according to claim 6, wherein the combiner, the first radio frequency receive circuit, the second radio frequency receive circuit, the satellite communication baseband circuit, and the first wireless communication baseband circuit are all integrated on a same chip.

8. The terminal device according to claim 7, wherein the first radio frequency front-end circuit, the second radio frequency front-end circuit, the combiner, the first radio frequency receive circuit, the second radio frequency receive circuit, the satellite communication baseband circuit, and the first wireless communication baseband circuit are all integrated on a same chip.

9. The terminal device according to any one of claims 3 to 5, wherein the terminal device further comprises a first baseband transmit circuit, a second baseband transmit circuit, and a third radio frequency front-end circuit;
the first baseband transmit circuit is configured to: receive a fourth baseband signal sent by the first wireless communication baseband circuit, process the fourth baseband signal into a third radio frequency signal, and transmit the third radio frequency signal through the third radio frequency front-end circuit; and
the second baseband transmit circuit is configured to: receive a fifth baseband signal sent by the second wireless communication baseband circuit, process the fifth baseband signal into a fourth radio frequency signal, and transmit the fourth radio frequency signal through the third radio frequency front-end circuit.

10. A terminal device, comprising N first radio frequency front-end circuits, N first radio frequency receive circuits, a second radio frequency receive circuit, a switch, a satellite communication baseband circuit, and a cellular baseband circuit, wherein N is a positive integer;
the N first radio frequency receive circuits are in a one-to-one correspondence with and electrically connected to the N first radio frequency front-end circuits, and any first radio frequency receive circuit is configured to: receive a first radio frequency signal sent by the first radio frequency front-end circuit electrically connected to the first radio frequency receive circuit, process the first radio frequency signal into a first baseband signal, and send the first baseband signal to the cellular baseband circuit; and
an input side of the second radio frequency receive circuit is electrically connected to an input side of at least one first radio frequency receive circuit through the switch, and is configured to: receive the first radio frequency signal sent by at least one first radio frequency front-end circuit, process the first radio frequency signal into a second baseband signal, and send the second baseband signal to the satellite communication baseband circuit.

11. The terminal device according to claim 10, wherein the N first radio frequency receive circuits, the second radio frequency receive circuit, the switch, the satellite communication baseband circuit, and the cellular baseband circuit are integrated on a same chip.

12. The terminal device according to claim 11, wherein the first radio frequency front-end circuit, the N first radio frequency receive circuits, the second radio frequency receive circuit, the switch, the satellite communication baseband circuit, and the cellular baseband circuit are integrated on a same chip.

13. The terminal device according to any one of claims 10 to 12, wherein the terminal device further comprises a baseband transmit branch, and the terminal device further comprises a second radio frequency front-end circuit; and
the baseband transmit branch is configured to: receive a third baseband signal sent by the cellular baseband circuit, process the third baseband signal into a second radio frequency signal, and transmit the second radio frequency signal through the second radio frequency front-end circuit.
